(19) Europäisches Patentamt
European Patent Office
Office européen des brevets

(11) **EP 3 856 507 B1**

(12) **EUROPEAN PATENT SPECIFICATION**

(45) Date of publication and mention
of the grant of the patent:
**31.08.2022 Bulletin 2022/35**

(21) Application number: **18826493.1**

(22) Date of filing: **01.11.2018**

(51) International Patent Classification (IPC):
**B30B 15/28** $^{(2006.01)}$ **G05B 23/02** $^{(2006.01)}$

(52) Cooperative Patent Classification (CPC):
**G05B 23/0243; B30B 15/26; B30B 15/28;
G05B 23/0254;** G05B 2219/2622

(86) International application number:
**PCT/CZ2018/050053**

(87) International publication number:
**WO 2020/064030 (02.04.2020 Gazette 2020/14)**

(54) **DIAGNOSTIC SYSTEM OF FORMING MACHINES**

DIAGNOSESYSTEM FÜR UMFORMMASCHINEN

SYSTÈME DE DIAGNOSTIC DE MACHINES DE FORMATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2018 CZ 20180515**

(43) Date of publication of application:
**04.08.2021 Bulletin 2021/31**

(73) Proprietor: **4dot Mechatronic Systems s.r.o.
Medlanky
61200 Brno (CZ)**

(72) Inventors:
• **OTOUPALIK, Jan
66447 Strelice (CZ)**
• **BURIAN, Josef
66484 Stanoviste (CZ)**

(74) Representative: **Dadej, Leopold
Na Valtické 339/6
691 41 Breclav 4 (CZ)**

(56) References cited:
EP-A1- 2 202 500       EP-A2- 1 177 889
EP-B1- 1 177 889       EP-B1- 2 202 500
WO-A2-2006/031635      US-A1- 2002 052 712
US-A1- 2002 183 971    US-A1- 2004 254 696
US-A1- 2016 202 693    US-A1- 2018 106 261

EP 3 856 507 B1

**Description**

Field of the Invention

The invention relates to a diagnostic system of forming machines, for the use in reducing the risk of machine damage, increasing the use of forming machines, reducing the risk of deviations on formed products, increasing productivity and process monitoring.

Background of the Invention

Forming machines process different materials by the forming process. Changes in shape and improvement of physical properties occur during forming. Compared to machine tools, forming machines have a more robust and stiffer construction and exhibit a higher force load. The effect of forming forces results in considerable deformation of machine parts. Extremely high vibrations due to forming processes may also occur in forming machines. For this reason, it is advisable to use diagnostic systems to measure physical quantities acting on different parts of forming machines.

Diagnostic systems used on machine tools are known in the art. Due to much less force load and lower vibrations in machine tools to which both measurement parts of the diagnostic systems and a method of evaluation of the measured data are adapted, these diagnostic systems are not applicable for forming machines.

Furthermore, systems utilizing different types of sensors as protective members are known in the art. The sensors measure only exceeding the limit value and thus do not allow diagnostics of the forming machines.

In addition, diagnostic systems using various types of sensors are known, with individual types of sensors being used to measure certain phenomena and the fault states resulting therefrom. However, this solution is inappropriate, since fault states can be detected incorrectly due to fault recognition only on the basis of data measured by one type of sensors.

Document EP 1 177 889 A2 relates to diagnosis of pressing machines based on comparison of measured physical waveform and pre-stored reference waveform.

It would therefore be advantageous to provide a diagnostic system, which would allow for use on forming machines. This solution should allow a sufficiently precise evaluation of the various fault states of parts of the forming machines, tools of the forming machines or the formed product. At the same time, the solution should allow identification of various stages of the forming process. Present solution should also allow identification of new, previously unknown, fault states and their storage in a set of model states.

Summary of the Invention

The above mentioned drawbacks are eliminated by a method of performing technical diagnostics of forming machines according to claim 1.

The above method of performing mechanical diagnostics of forming machines by means of a diagnostics system for forming machines with at least two sensors, the measured data of which are further processed by the evaluation process including the step of pairing the measured data, allows to achieve a goal of sufficiently accurate evaluation of various fault states, as using the data processed in this manner it is possible to identify fault states that could not be identified using data measured by only one sensor or using data measured by multiple sensors but without the step of pairing the measured data, since the evaluation takes into account data measured by all sensors.

If the processed data do not correspond to the model fault-free state and at the same time do not correspond to any model fault state, the control part will issue information to the information interface that the forming machine is in an unknown state. An evaluation that this is an unknown state helps to achieve the goal of identifying unknown states, as this state can be identified and saved as a new model state by the user interface.

The evaluation process further comprises a step of data modification using a transmission function. The step of data modification with the transmission function allows for the impact removal of individual sensors location in case the location of the sensors is different from the location of the sensors for which the model states waveforms were determined.

The diagnostic system further comprises at least one temperature sensor and the evaluation process further comprises a step of performing temperature compensation of data measured by sensors selected from the group of vibration sensors, strain sensors and distance sensors, wherein the temperature compensation is performed on the basis of data measured by the temperature sensor. By temperature compensation of the data measured by sensors other than temperature sensors, it is possible to eliminate the effect of changing ambient temperature of the sensors, thereby increasing the accuracy of evaluation of various fault states of parts of forming machines, tools, or formed products.

The evaluation process further comprises a step of filtering the processed data, wherein the data from at least one sensor are used to set filter parameters for filtering data from at least one sensor. Using data from one sensor to set filter parameters for filtering data from at least one sensor allows for more accurate identification of the relevant data portion.

The diagnostics system for forming machines comprises an information interface and a control part, the control part comprising a memory, the essence of which is that the diagnostic system of the forming machines further comprises at least two sensors for placing on forming machines selected from the group of vibration sensors, strain sensors and distance sensors, further stored in the memory of the control part is a fault-free state comprising waveforms corresponding to the waveforms and quantities measured by at least two selected sensors in fault-free operation, and further stored in the memory of the control part are at least the first model fault state and the second model fault state, wherein both the first model fault state and the second model fault state include waveforms corresponding to waveforms and quantities measured by at least two selected sensors in case of a fault during operation. The use of the diagnostics system for forming machines allows achieving the goal of sufficiently accurate evaluation of various fault states, as it is possible to identify fault states by means of two sensors, which would not be possible to determine using data measured by only one sensor.

The model fault-free state is a model fault-free state of at least one member of the group consisting of a forming machine part, tool, or formed product.

The model fault state is any model fault state selected from the group of a model fault state of a forming machine part, a model fault state of a tool or a model fault state of the formed product.

The control part includes a monitoring unit and a remote server, the sensors being data connected to the monitoring unit and the monitoring unit being data connected to the remote server.

At least one of the sensors is a temperature sensor, the temperature sensor being located in close proximity to at least one sensor of another type. By using the temperature sensor, it is possible to perform temperature compensation of data measured by sensors of another type.

Description of Drawings

The invention is further explained with the use of exemplary embodiments, which are described by way of the accompanying drawings, wherein:

Fig. 1 Shows a diagnostics system for forming machines on a forming machine.

Fig. 2 Shows a built-in beam with two notches.

Fig. 3 Shows a time point of forming 1.

Fig. 4 Shows a time point of forming 5.

Fig. 5 Shows a time point of forming 7.

Fig. 6 Shows a time point of forming 10.

Fig. 7 Shows a time point of forming 15.

Fig. 8 Shows a time point of forming 20.

Fig. 9 Shows a time point of forming 25.

Fig. 10 Shows a time point of forming 30.

Fig. 11 Shows a time point of forming 35.

Fig. 12 Shows a time point of forming 40.

Fig. 13 Shows a time point of forming 43.

Fig. 14 Shows a time point of forming 45.

Fig. 15 Shows a time point of forming 50.

Fig. 16 Shows the lower die deformation waveform during the forming process.

Fig. 17 Shows the lower die vibration waveform during the forming process.

Fig. 18 Shows the forging force waveform during the forming process.

Fig. 19 Shows the position of the ram waveform during the forming process.

Fig. 20 Shows the waveform of the acceleration of an upper clamp in the direction of the ram movement during the forming process.

Fig. 21 Shows the waveform of the acceleration of the lower die perpendicular to the direction of the ram movement during the forming process.

Fig. 22 Shows the measured strain waveform and the measured strain waveform after temperature compensation.

Fig. 23 Shows a change in sensitivity of the piezoelectric accelerometer depending on temperature.

Fig. 24 Shows a horizontal crank press.

Fig. 25 Shows a model fault-free state.

Fig. 26 Shows a model fault state of higher ductile resistance of the formed blank.

Fig. 27 Shows a model fault state of a crack in a clamp.

Fig. 28 Shows a model fault state of a crack in a frame.

Fig. 29 Shows a comparison of the processed data of the first specific exemplary embodiment and the model fault state of the higher ductile resistance of the formed blank.

Fig. 30 Shows vibration waveforms when comparing the processed data of the first specific exemplary embodiment and the model fault-free state.

Fig. 31 Shows strain waveforms when comparing the processed data of the first specific exemplary embodiment and the model fault-free state.

Fig. 32 Shows processed data of the second specific exemplary embodiment.

Fig. 33 Shows vibration waveforms when comparing the processed data of the second specific exemplary embodiment and the model fault-free state.

Fig. 34 Shows strain waveforms when comparing the processed data of the second specific exemplary embodiment and the model fault-free state.

Fig. 35 Shows a comparison of the processed data of the second specific exemplary embodiment and the model fault state.

Fig. 36 Shows a comparison of the processed data of the second specific exemplary embodiment and the model fault state of a crack in a frame.

Fig. 37 Shows processed data of the third specific exemplary embodiment.

Fig. 38 Shows vibration waveforms when comparing the processed data of the third specific exemplary embodiment and the model fault-free state.

Fig. 39 Shows strain waveforms when comparing the processed data of the third specific exemplary embodiment and the model fault-free state.

Fig. 40 Shows processed data of the first specific exemplary embodiment.

Fig. 41 Shows a comparison of the processed data of the first specific exemplary embodiment and the model fault state.

Fig. 42 Shows a subset $F_{120}$ of the model fault state of a crack in a clamp.

Fig. 43 Shows a subset $G_{130}$ of the processed data of the third specific exemplary embodiment.

Fig. 44 Shows a comparison of subsets $F_{120}$ and $G_{130}$.

Fig. 45 Shows the absolute value of difference in functions of subsets $F_{120}$ and $G_{130}$.

Fig. 46 Shows distance waveforms when comparing the processed data of the fourth specific exemplary embodiment and the model fault-free state.

Fig. 47 Shows vibration waveforms when comparing the processed data of the fourth specific exemplary embodiment and the model fault state of a crack in a clamp.

Fig. 48 Shows distance waveforms when comparing the processed data of the fourth specific exemplary embodiment and the model fault state of a crack in a clamp.

Fig. 49 Shows a model fault state of a guide clearance.

Fig. 50 Shows a model fault state of a die clearance.

Fig. 51 Shows a model fault state of a clamp clearance.

Fig. 52 Shows a model fault state of an inner bearing ring in the frequency domain.

Fig. 53 Shows a model fault state of an inner bearing ring in the time domain.

Fig. 54 Shows the data measured by the first accelerometer in the time domain.

Fig. 55 Shows the data measured by the third accelerometer in the time domain.

Fig. 56 Shows the data measured by the first accelerometer in the frequency domain.

Fig. 57 Shows the processed data in the frequency domain.

Fig. 58 Shows the processed data in the time domain.

Fig. 59 Shows a comparison of the processed data and the model fault state of inner bearing ring in the frequency domain.

Fig. 60 Shows a comparison of the processed data and the model fault state of inner bearing ring in the time domain.

Fig. 61 Shows a model fault-free state.

Fig. 62 Shows processed data of the fifth specific exemplary embodiment.

Fig. 63 Shows a comparison of the processed data of the fifth specific exemplary embodiment and the model fault-free state.

Fig. 64 Shows the model fault-free state in the frequency domain.

Fig. 65 Shows the processed data of the fifth specific exemplary embodiment in the frequency domain.

Fig. 66 Shows a comparison of the processed data of the fifth specific exemplary embodiment and the model fault-free state in the frequency domain.

Fig. 67 Shows a rolling machine with two tools.

Fig. 68 Shows a sectional view of a rolling machine with two tools.

Fig. 69 Shows a model fault-free state of a rolling machine.

Fig. 70 Shows a model fault-free state of a rolling machine.

Fig. 71 Shows a model fault state of tool tooth damage.

Fig. 72 Shows a model fault state of a crack in a blank.

Fig. 73 Shows the processing of simulated data in a fault state of tool tooth damage.

Fig. 74 Shows the processing of simulated data in a fault state of a crack in a blank.

Fig. 75 Shows processed data of the seventh specific exemplary embodiment.

Fig. 76 Shows processed data of the seventh specific exemplary embodiment.

Fig. 77 Shows a comparison of the processed data of the seventh specific exemplary embodiment and the model fault-free state of the rolling machine.

Fig. 78 Shows a comparison of the processed data of the seventh specific exemplary embodiment and the model fault state of tool tooth damage.

Fig. 79 Shows a comparison of the processed data of the seventh specific exemplary embodiment and the model fault state of a crack in a blank.

Fig. 80 Shows a comparison of the processed data of the seventh specific exemplary embodiment and the model fault-free state of the rolling machine.

Fig. 81 Shows processed data of the eighth specific exemplary embodiment.

Fig. 82 Shows processed data of the eighth specific exemplary embodiment.

Fig. 83 Shows a comparison of the processed data of the eighth specific exemplary embodiment and the model fault-free state.

Fig. 84 Shows a comparison of the processed data of the eighth specific exemplary embodiment and the model fault-free state.

Fig. 85 Shows a comparison of the processed data of the eighth specific exemplary embodiment and the model fault state of tool tooth damage.

Fig. 86 Shows a comparison of the processed data of the eighth specific exemplary embodiment and the model fault state of a crack in a blank.

Fig. 87 Shows processed data of the ninth specific exemplary embodiment.

Fig. 88 Shows processed data of the ninth specific exemplary embodiment.

Fig. 89 Shows a comparison of the processed data of the ninth specific exemplary embodiment and the model fault-free state of the rolling machine.

Fig. 90 Shows a comparison of the processed data of the ninth specific exemplary embodiment and the model fault-free state of the rolling machine.

Fig. 91 Shows a comparison of the processed data of the ninth specific exemplary embodiment and the model fault state of tool tooth damage.

Fig. 92 Shows a comparison of the processed data of the ninth specific exemplary embodiment and the model fault state of a crack in a blank.

Exemplary Embodiments of the Invention

An example of the invention is a diagnostic system of forming machines. The forming machine is either a press or a roller machine. The forming machine comprises a drive, guide and forming part. In case the forming machine is a press, the drive of the forming machine includes an engine, a ram and, depending on the type of press selected, further includes a transmission device which translates the rotary motion into translation motion. In case the forming machine is a rolling machine, the drive of the forming machine includes an engine and, depending on the type of rolling machine selected, further includes a transmission device, which translates the rotary motion into translation motion. In case the forming machine is a press, the forming part includes a tool clamp and a tool. The tool is a part of the forming machine directly involved in the forming process. The tool acts forcefully on the formed product. The tool includes a die. The die includes top die and lower die. In case the forming machine is rolling machine, the forming part includes a roller and a tool. In case the forming machine is a press, the guide comprises a ram guide. In case the forming machine is a rolling machine, the guide comprises a cylinder displacement guides and cylinder bearings. The forming machine further comprises a frame of the forming machine. The forming machine further comprises a forming machine control unit.

The diagnostics system of forming machines comprises at least two sensors placed on the forming machine. The sensors are selected from a group of vibration sensors, strain sensors or distance sensors. The vibration sensor is an accelerometer. In this exemplary embodiment of the vibration sensor, the vibration sensor used is a piezoelectric accelerometer with integrated electronics. Compared to other types of accelerometers, it has higher resilience in the industrial environment and a larger measurement range. The piezoelectric accelerometer can only measure changes in acceleration, thus it is not possible to measure the stationary gravitational field of the earth (acceleration "g"), and so it serves to scan the absolute acceleration of dynamic processes. In an alternative exemplary embodiment of the vibration sensor, the vibration sensor is any type of accelerometer other than piezoelectric accelerometer. The strain sensor is a strain gauge. The strain gauge is any strain sensor from the group of foil, semiconductor, piezoresistive, MEMS, optical strain gauge or thin-walled strain gauge. In the exemplary embodiment, a semiconductor strain gauge is used, which is the most advantageous type for use in industrial environment due to its high sensitivity and resistance to environmental influences. Strain sensors are used here to measure relative dynamic and static processes. The distance sensor is any sensor from the group of the capacitive distance sensor, encoder, laser position sensor, confocal distance sensor, optical rangefinder, inductive sensor, magneto-inductive sensor or wire sensor. Distance sensors are used to measure relative dynamic and static processes. The sensors are located on the forming machine. The diagnostic system of forming machines also includes a control part. In one of the exemplary embodiments of the control part, the control part includes a monitoring unit and a computing device. The sensors are data connected to the monitoring unit. The sensor data connection with the monitoring unit is wired or wireless. The sensor connection with the monitoring unit is further direct or via a bus or via another computing unit. The computing unit means, for example, a control system of a forming machine. The sensors are connected to the monitoring unit either analogically or digitally. In the case of an analogue connection, the monitoring unit is equipped with an analogue-to-digital converter, which converts the signal from the sensor so that it is further digitally processable. In the case of a digital connection, the sensor is equipped with an analogue-to-digital converter and a digital signal is sent to the monitoring unit of the diagnostic system. The monitoring unit is located near the monitored forming machine. The monitoring unit is data connected with the computing device. The data connection between the monitoring unit and the computing device is wired or wireless. The computing device is a remote server. In an alternative embodiment, the computing device is a machine control system or a monitoring unit or any other relevant computing device. The diagnostic system of forming machines further comprises an information interface data connected to the control part. The information interface is any device capable of transmitting information that the forming machine is in a certain state. In the first exemplary embodiment of the information interface, the information interface is a personal computer. In an alternative exemplary embodiment, the information interface is any electronic device with a display or an autonomous cooperating system affecting the operation of the forming machine. The data connection of the information interface and the control part is wired or wireless. In one of the exemplary embodiments, the information interface is part of the computing device.

In one of the exemplary embodiments, the monitoring unit is further data connected with peripheral devices. A peripheral device is any device from the group of a forming machine control unit, a production planning system, an engine changer of forming machine, an external database, other sensors and company information systems, quality monitoring systems, various other machines affecting the forming machine, storage systems, security systems, gauges or any other relevant peripheral devices.

In one of the exemplary embodiments, the diagnostic system further comprises at least one additional sensor from the group of temperature sensors, thin-walled temperature sensors, force sensors, pressure sensors, thin-walled pressure sensors, position sensors, velocity sensors, linear or rotary encoders, gyroscopes, voltage meters, torque meters or any other sensors that refines the state evaluation of the forming machine.

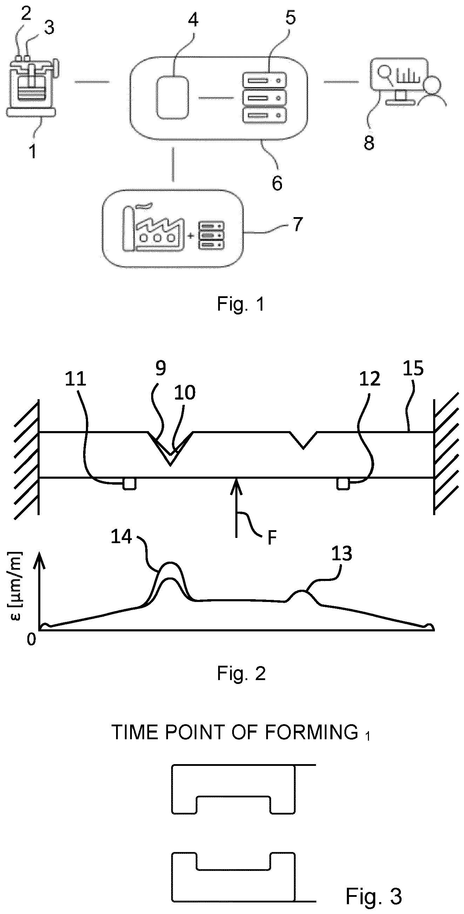

An example of the diagnostic system of forming machine is shown in Figure 1 where the forming machine is a forming machine 1, the two sensors are a first sensor 2 and a second sensor 3, the monitoring unit is a monitoring unit 4, the computing device is a computing device 5, the control part is a control part 6, the peripheral device is a peripheral device 7 and the information interface is an information interface 8.

In all exemplary embodiments, the control part further comprises a memory. Model states are stored in the memory of the control part. Model states are model fault states or model fault-free state. Model fault states are any model fault states from the group of model fault states of a forming machine part, tool model fault states, or formed product model fault states. The model fault-free state is the model fault-free state of at least one member from the group of a forming machine part, tool, or formed product. In one of exemplary embodiments of the model fault-free states, when a forming machine part and the formed product are diagnosed, the model fault-free state is a model fault-free state of the forming machine part and of the formed product. The model fault-free state and at least the first model fault state and at least the second model fault state are stored in the memory of the control part. None of the model fault states is the same as any other model fault state. All model states include variables and waveforms that change during the forming process and correspond to waveforms and quantities measured during fault-free operation or during a fault during operation. Physical parameters affecting the model states are parameters related to material properties of individual machine parts, their mutual connection, waveforms of physical quantities, such as the force waveform, machine geometry, strain waveform, voltage waveform, the components dynamics and kinematics, heat transfer parameters, acoustic and electromagnetic properties. In the first exemplary embodiment of the model state waveforms derivations, the model state waveforms are derived based on theoretical physical description of the behaviour of the forming machine during operation. Model state waveforms derived in such way enable the use on new forming machines without the need for prior measurements. In an alternative embodiment of model state waveforms derivations, the model state waveforms are derived based on the theoretical physical description of the behaviour of the forming machine during operation, modified based on the previous measurements of the actual behaviour of the forming machine during operation. Model state waveforms derived in such way enable the modifications of the theoretical physical description of the forming machine behaviour based on the actual forming machine behaviour during the operation and is therefore a refined physical description. An exemplary embodiment of refinement of a physical description based on measurements during actual operation can be seen in Figure 2. In this exemplary embodiment, the behaviour of a built-in beam 15 with two notches is described. This built-in beam is a part of the frame of the forming machine, and the physical description of the behaviour describes the strain 13 of the beams with a notch during operation. On the basis of vibration measurements by the first vibration sensor 11 on the beam and by the second vibration sensor 12 on the beam, the physical description of the behaviour of the built-in beam is modified so that one of the notches of the built-in beam is virtually enlarged. By virtual enlargement of the notch of the built-in beam and the physical behaviour description, the strain described during the forming process is larger and thus corresponds to the actual behaviour. The model was refined and the original notch 9 was changed to an enlarged notch 10 which is bigger than the notch 9. Based on the refined model, the beam strain 14 with the enlarged notch from the force F is larger and closer to the actual machine. In another alternative embodiment of the model state waveform derivations, the model state waveform derivations are derived from the machine created mathematical model created by machine on the basis of learned knowledge utilizing previous measurements of the actual behaviour of the forming machine during operation. Machine creation of mathematical model based on the learned knowledge is implemented in this exemplary embodiment through a neural network. Model state waveforms derived in such way allow for the use on forming machines without manufacturing documentation or on forming machines that have been in operation for a long time and various parts thereof have clearances which are not included in the manufacturing documentation. In another alternative embodiment of the model state waveform derivations, the model state waveform derivations are measured on the basis of previous measurements of the actual behaviour of the forming machine during operation. Model state waveforms derived in such way allow for the use without the need to create any mathematical models. When deriving different model states, multiple derivation methods can be used. Exemplary embodiments of model state waveform derivations described above can be combined to obtain different model states in various ways. The fault of a forming machine part is a fault of any part of the drive or guide, such fault is for example a fault of the forming machine engine, hydraulic cylinder, brake, clutch, gear, bearings, guide or frame. The tool fault is a forming part fault, such faults include for example a cracked forming part, wear of the forming part, clearance in the forming part, damage to the surface of the forming part or damage to the geometry of the forming part. The formed product fault is a fault of the input blank or the final product of the forming machine, such as, for example, poor geometry, material structure, chemical properties of the material or surface structure. In one of the exemplary embodiments of the reasons for the occurrence of a forming machine part fault, tool fault or formed product fault, the fault is caused by inappropriately set forming process parameters. Forming process parameters are, for example, the shift rate of the forming parts with respect to each other, the forming temperature, the ram stroke or the force of the ram with the top die on the formed product.

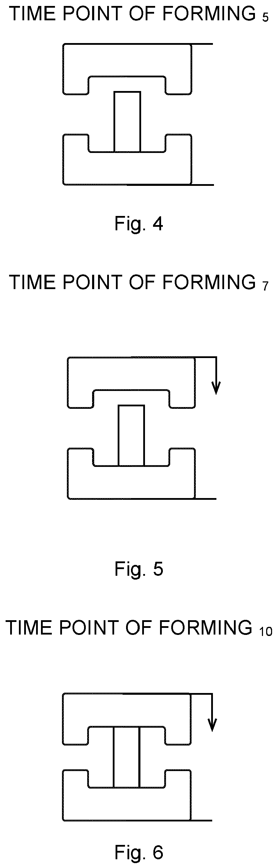

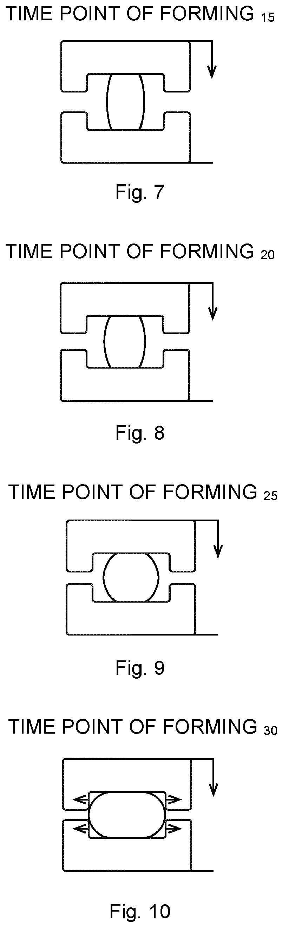

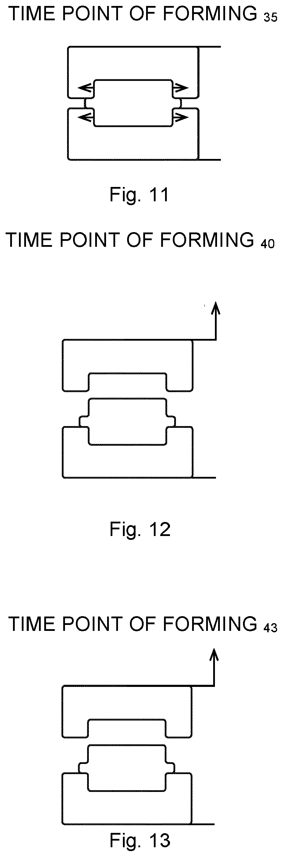

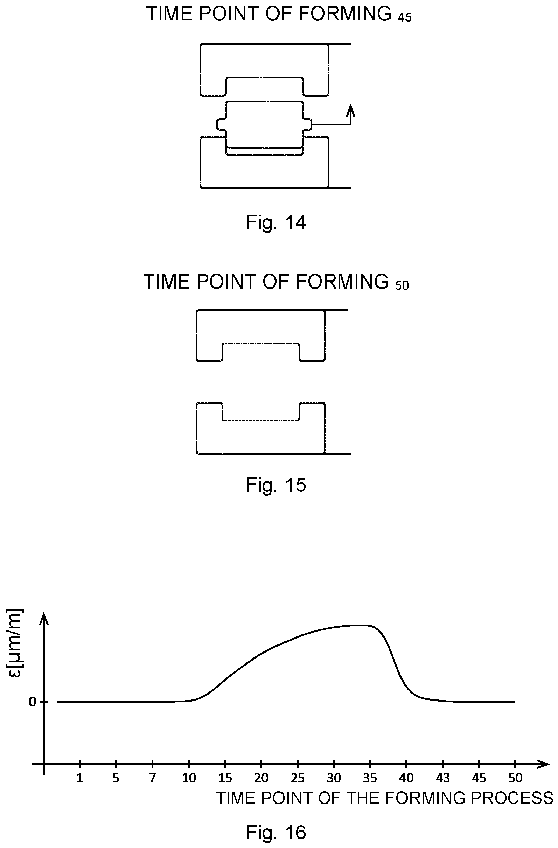

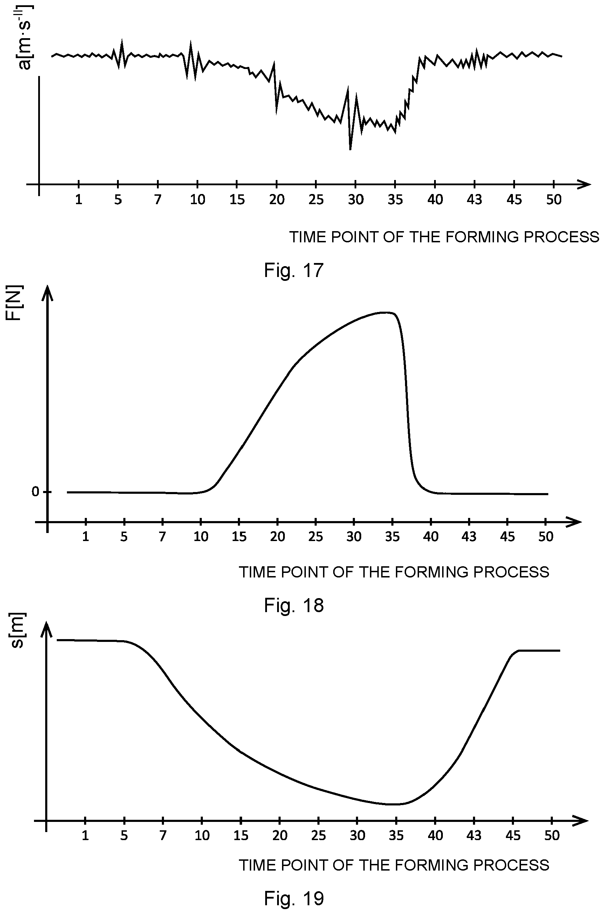

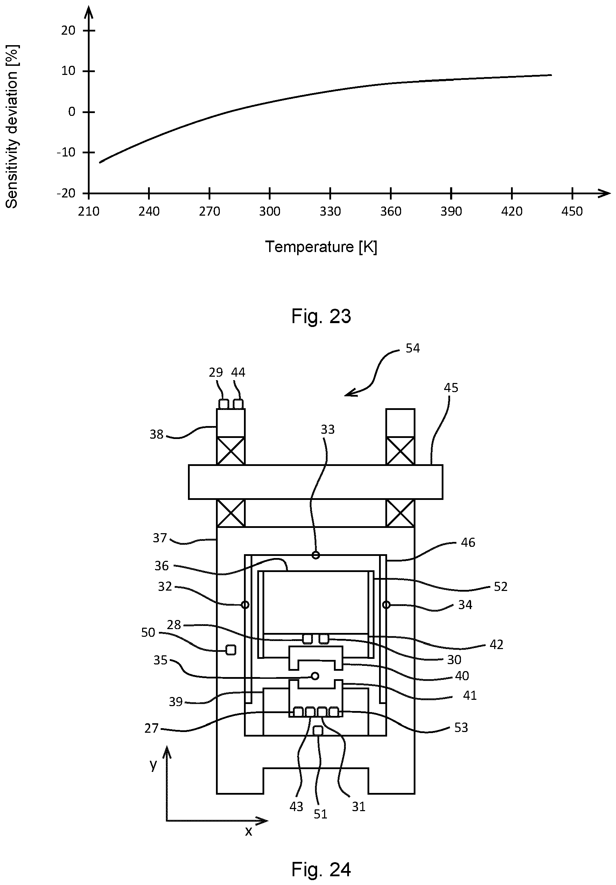

The forming process is a process in which the shape and structure of the formed material are altered by the force of the tool. In one of the exemplary embodiments, the process is a high temperature forming of the product on the horizontal crank press of Figure 24. For the purpose of technical diagnostics, the most important is the description of the forming process when the formed product is affected by force of the forming part of the machine. From the perspective of signal analysis, this can be divided into several phases as shown in Figures 3 to 15 respectively. Figures 16 to 19 illustrate the waveform of the measured quantities during the forming process. In this exemplary embodiment of the forming process, a first accelerometer 27 located in the lower die and a strain sensor 31 located also in the lower die 41 are used to measure the state of the forming machine parts, tool and formed product, wherein the values measured by these sensors in various stages of the forming process can be seen in Figures 16 and 17. Figure 18 describes the forming force waveform during the forming process obtained from the forming machine control system. Figure 19 shows the position of the ram during the forming process obtained from the machine control system. At the forming process stage shown in Figure 3 and at time point 1 within the waveforms in Figures 16 to 19, the ram is at the upper dead centre, at point 33 of the smallest distance between the ram and the machine frame at the top dead centre, and there is no force applied on the forming part. In the forming process phase shown in Figure 4 and at time point 5 within the waveforms of Figures 16 to 19, a blank is placed on the lower die. In the forming process stage shown in Figure 5 and at time point 7 within the waveforms of Figures 16 to 19, the ram moves downwards and touches the guide at the contact point 32 of the ram and the stand while moving downwards, wherein at the same time no force is applied on the lower die. In the forming process stage shown in Figure 6 and at time point 10 within the waveforms of Figures 16 to 19, the top die comes into contact with the blank and upon the contact, an impulse is recorded by the first accelerometer and at the same time the strain sensor begins to measure the deformation of the formed part. In the forming process stage shown in Figure 7 and at time point 15 within the waveforms of Figures 16 to 19 due to the continuous movement of the ram and the top die towards the lower dead centre, the blank is being strained and at the same time bending of the forming part and the defining of the manufacturing clearance of the whole forming machine and of the forming machine clearance generated by the operation occur. In the forming process stage shown in Figure 8 and at time point 20 within the waveforms of Figures 16 to 19, the forming machine clearances are already defined and a significant deformation of the forming part in the transverse direction occurs. In the forming process stage shown in Figure 9 and at time point 25 within the waveforms of Figures 16 to 19, further forming part deformation occurs and the forming machine frame begins to deform. In the forming process stage shown in Figure 10 and at time point 30 and within the waveforms of Figures 16 to 19, a collision of the material with the wall of the die occurs, by this collision an impulse occurs, which is recorded by the vibration sensor, at the same time expansion of the die and the tool clamp in a radial direction occur. In the forming process stage shown in Figure 11 and at time point 35 and within the waveforms of Figures 16 to 19, the ram with the upper die get in the lower dead centre, while at the same time the smallest distance between the upper and lower die at the point 35 of the smallest distance of the dies, wherein forming of the material is terminated at this point and at the same time the maximum deformation of the die and tool clamp in the radial direction is achieved. In the forming process stage shown in Figure 12 and at time point 40 and within the waveforms of Figures 16 to 19, the ram moves with the upper die towards the upper dead centre, while the deformation of the tool clamp is released, the radial deformation of the die partially persists. In the forming process stage shown in Figure 13 in time point 43 and within the waveforms of Figures 16 to 19, the ram moves upwardly and touches the guide which is formed by the guide 52 on the ram and the guide 46 on the frame at a contact point 34 of the ram and the frame when moving upwards while at the same time no force acting on the lower die occurs. In the forming process stage shown in Figure 14 and at time point 45 within the waveforms of Figures 16 to 19, the final product is removed and all remaining deformations are released. The forming process phase shown in Figure 15 and at time point 50 and within the waveforms of Figures 16 to 19 is identical to the forming process phase shown in Figure 3 and at the time point 1 and within the waveforms of Figures 16 to 19.

In all exemplary embodiments, sensor data are after measurement sent to the control part. In the control part, the measured data are processed by an evaluation process comprising the step of pairing the measured data. In the step of pairing the measured data, the measured data from at least two sensors are paired so that the data have the same time stamp. Pairing the data so that the data have the same time stamp means that the measured waveforms are displaced so that data related to the identical moment of the forming process begin on the time axis of the measured waveforms at the same time. In an alternative embodiment of the step of pairing the measured data, the measured data of at least two sensors are paired so that they are sorted according to a certain repeating pattern consecutively.

Once the step of pairing the measured data has been completed, the measured data become processed data, wherein the processed data can be further processed by any other steps.

The data thus processed are in the following step compared to the model states in the control part, and on the basis of this comparison, the control part issues information to the information interface that the forming machine is in a fault-free state or in at least one of the model fault states. The control part issues information to the information interface that the machine is in a certain state, if the processed data is similar to the model state waveforms. The similarity is determined either through the information interface or by machine on the basis of knowledge input or learned knowledge. Machine determination of similarity based on knowledge input is in one of the exemplary embodiments of similarity determination implemented through a state machine or multi-valued logic. The state machine needs to have clearly defined criteria, it is therefore suitable for determining the similarity of uniquely defined waveforms. Multi-valued logic is, in turn, suitable for working with indefinite outputs. Several processing methods can be used to determine similarity. The control part issues information on the state of the forming machine to the information interface that displays it.

In one of the exemplary embodiments of similarity determination, in the case of machine-based similarity determination based on the knowledge input, a COM similarity definition operation is first defined to determine whether the waveforms are similar. The operation of determining the COM similarity is defined by the formula

$$\underset{x \in \langle A, B \rangle}{COM} [F @ G^*] < E,$$

where F is a group of model states, G * are the data for which similarity on the interval <A, B> with states E is determined. Operation @ represents an operation of comparison of functions, such as subtraction and division, optionally subtraction of derivations, integrations and others. The COM operation represents a statistical evaluation of the subtractions of, for example, maximum value, average value, and others.

In one of the exemplary embodiments of similarity determination, in case of machine-based similarity determination on the basis of learned knowledge, a decision algorithm based on the processed data and designation of the respective states is created. Similarity determination according to this exemplary embodiment includes the step of preparing data to determine when the respective states of the processed data are designated. Subsequently, a step of creating a decision algorithm is performed. In this exemplary embodiment, a neural network represents the decision algorithm, and the creation of the decision algorithm thus includes the setting of input and output parameters of the neural network. Subsequently, the decision algorithm-learning step is carried out, when the processed data are sent to the decision algorithm together with the designation of the respective processed data states until the fault in determining the state of the processed data is removed. The result of this step is the creation of model states and the decision algorithm. In the next step, the decision algorithm is used to recognize the respective states of the forming machine. In this exemplary embodiment, similarity determination by machine-based similarity determination based on learned knowledge, together with the above-mentioned steps, it is advantageously possible to carry out a decision algorithm improvement step, in which additional processed data are sent to the existing decision algorithm together with the designation of the respective states of the processed data, wherein re-learning of the decision algorithm takes place. In this exemplary embodiment of the similarity determination by machine-based similarity determination based on learned knowledge together with the above-mentioned steps, it is advantageously possible to perform a step of pairing the measured data, wherein this step precedes the step of preparing data for learning. Machine-based similarity determination based on learned knowledge according to the exemplary embodiment is suitable for similarity determination of complex processes with inaccurate models and with a large amount of measured data for learning.

In another exemplary embodiment of similarity determination, a decision algorithm based on the processed data and model states where the physical significance of the processed data and the model states correspond to each other is generated in the case of machine-based similarity determination based on learned knowledge. Similarity determination according to this exemplary embodiment includes a step of preparing data for learning when corresponding model states are assigned to the processed data. The decision algorithm in this exemplary embodiment is represented by neural network, and the creation of the decision algorithm includes the setting of the input and output parameters of the neural network. Subsequently, the decision algorithm-learning step is carried out when the processed data are sent to the decision algorithm along with the model states until the fault in determining the state of the processed data is removed. The result of this step is the creation of the decision algorithm. In the next step, the decision algorithm is used to recognize the respective states of the forming machine. In this exemplary embodiment of similarity determination by means of machine-based similarity determination based on the learned knowledge, together with the above-mentioned steps, it is advantageously possible to carry out a decision algorithm improvement step, when additional processed data are sent to the existing decision algorithm together with the corresponding model states, wherein re-learning of the decision algorithm thus takes place. In this exemplary embodiment of similarity determination by machine-based similarity determination based on learned knowledge, together with the above-mentioned steps, it is advantageously possible to perform a step of pairing the measured data, wherein this step precedes the step of preparing data for learning. Machine-based similarity determination based on learned knowledge according to the exemplary embodiment is suitable for similarity determination without the need of utilizing previous measured data and it thus can be used for new forming machines.

In one of the exemplary embodiments of the evaluation process, in the step of comparing processed data and model states, in the case that the processed data do not correspond to the model fault-free state of the forming machine and at the same time they do not correspond to any model fault state, the control part determines that this is an unknown state. The control part issues information that the forming machine is in an unknown state to the information interface that displays it, and at the same time allows the user to assign the displayed unknown state to a fault-free or a specific fault state of the forming machine. After assigning the displayed unknown state to a fault-free or a specific fault state of the part of the forming machine, tool, or formed product, this information is stored in the memory of the control part as a new model fault-free or fault state.

In one of the exemplary embodiments, the evaluation process further comprises a step of data modification by means of a transmission function. Waveforms of model states are determined for a specific spacing of sensors on the forming machine. The transmission function describes signal transmission from the area of origin to its scanning area. In one of the exemplary embodiments of the use of the transmission function, the data transmission function modifies the data so as to eliminate the effect of the location of the individual sensors if the location of the sensors is different from the location of sensors for which the model state waveforms were determined. In another exemplary embodiment of the use of the transmission function, the transmission function allows a replacement of multiple-location measurements using multiple sensors of the same type by a measurements in one spot using one sensor by adjusting the data measured by one sensor by applying several different transmission functions, wherein each of these transmission functions modifies the data so that the data will be comparable to the data otherwise measured by multiple sensors located in multiple locations. The location of the sensors affects the amplitude and the phase shift of individual data frequencies, wherein the transmission function is described in a complex form by the equation:

$$G(j\omega)\frac{y(t)}{u(t)} = \frac{y_0 e^{j.(\omega t+\varphi)}}{u_0 e^{j(\omega t)}} = \frac{y_0}{u_0} e^{j\varphi},$$

where $\dfrac{y_0}{u_0}$ is the amplitude ratio and $\varphi$ is the phase shift.

The transmission function is obtained analytically from the knowledge of the mechanical behaviour of the forming machine and the analytical equations thereof. In alternative embodiments of obtaining the transmission function, the transmission function is obtained by means of a parametric physical model or model created by artificial intelligence or experimentally by means of an impulse response.

In one exemplary embodiment of the data modification step by means of the transmission function, the modified data are the measured data. In another exemplary embodiment of the data modification step by means of the transmission function, the modified data are the processed data.

In one exemplary embodiment, the evaluation process includes the process of normalizing the processed data. In order to determine the state, it is necessary for the analysed data and the model waveform to match each other. This is accomplished by the process of selecting the interval of processed data and by normalizing it to the desired definition domain corresponding to the definition domain of the model waveform values. This process is essential for the process of the machine-based data comparison. In one exemplary embodiment, there may be an "*F*" state described by functions $f_1(x)$ to $f_n(x)$ and measured data "*G*" described by functions $g_1(x)$ to $g_n(x)$, where n indicates the number of signals describing the state. In exemplary comparison of the $f_1(x)$ and $g_1(x)$ functions with various definition domains, the function $g_1(x)$ is normalized to the function $g_1^*(x)$ with the same definition domain as $f_1(x)$ function, according to the equation:

$$g_i^*(x) = \frac{g_i\left(\frac{x-a_i}{b_i-a_i} * (d_i - c_i) + c_i\right) - \gamma_i}{\delta_i - \gamma_i} * (\beta_i - \alpha_i) + \alpha_i, x \in \langle a_i, b_i \rangle; i = 1.$$

According to the invention, the evaluation process further comprises a step of filtering the processed data. In the step of filtering the processed data, the data of at least one sensor are used to set filter parameters for filtering data from at least one sensor.

In the first exemplary embodiment of filtering the processed data, the filtering is performed so that the filter parameter is a time interval determined on the basis of data from one sensor. The filter thus set is then applied to data from the second sensor, and after filtering, only a certain time interval remains from these data. In the second exemplary embodiment of filtering the processed data, the filtration is performed so that the filter parameter is a time waveform of data from one sensor, which then determines the amplification or attenuation of the filtered data. The filter thus set is then applied to data from the second sensor, and after filtering, non-status information is suppressed in the data. Examples of non-status information are shocks, shock sequences, signals from other parts, process signals, component friction, certain frequencies captured by one sensor. In the third exemplary embodiment of filtering the processed data, the filtration is performed so that the filter parameter is the actual data waveform from one sensor. The filter thus set is then applied to the data from the second sensor and the data from the first sensor are subtracted from the data from the second sensor. In the fourth exemplary embodiment of the filtering of the processed data, the filtration is performed so that the filter parameter is the actual data waveform from one sensor, which is the position sensor and the kinematic model of the diagnosed forming machine. The filter thus set is then applied to data from the second sensor, where the arithmetic mean of all measurements at the filter set points is formed. This eliminates noise and highlights the carrier information. Measurements must be performed until at least the minimum number of measurement values at each measured point is obtained. This may vary depending on the noise - carrier information ratio in the data.

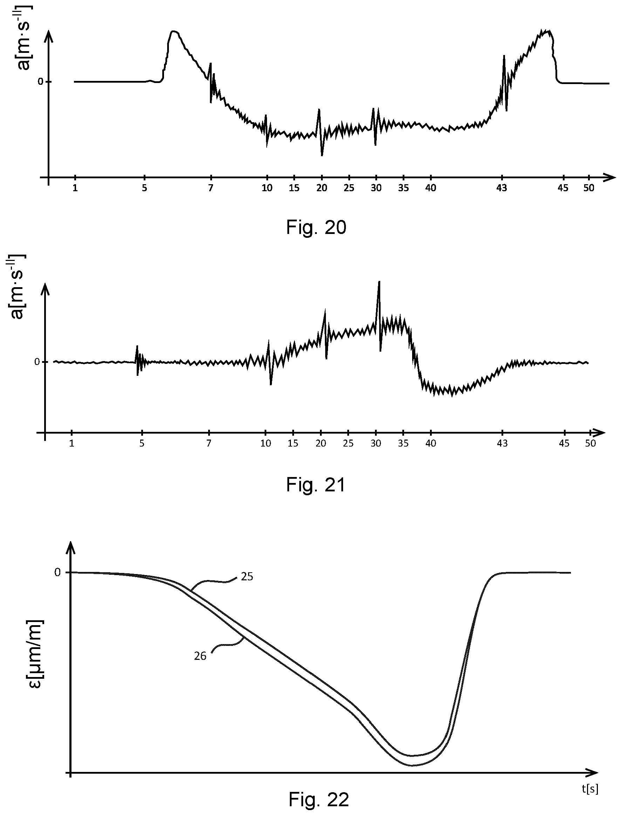

In another exemplary embodiment of the forming machine diagnostic system and the evaluation process, a temperature sensor is further located on the forming machine. Data measured by the temperature sensor are sent to the control part. The temperature sensor is located close to at least one sensor of another type. During the forming machine operation, the sensor environment is heated from the formed product by energy release during the forming process, by friction of bearings during operation or by heat transfer from other parts of the forming machine. Heating from the above-mentioned parts can cause temperature changes in the sensor environment, thereby changing the sensitivity of the sensors. If the strain sensor is made of a material with a different thermal expansion than that of the material of the forming machine at a given location, it is necessary to perform temperature compensation of the measured data. Thus, in Figure 22, it is possible to see the difference between the same measured data, wherein the waveform 26 represents the measured data without the temperature compensation, and the waveform 25 represents the same measured data with the temperature compensation. In this exemplary embodiment, the evaluation process thus includes the temperature compensation step. Based on the data from the temperature sensor, during the step of temperature compensation the control part performs temperature compensation of the data measured by the sensors selected from the group of vibration sensor, strain sensor, and distance sensor.

An exemplary embodiment of the temperature compensation step of the data measured by the strain sensor is performed as follows. The data measured by the strain sensor are data related to the force stress. Force stress is measured by means of strain sensor by measuring the change in voltage relative to the excitation voltage, wherein the voltage change occurs due to the change of resistance depending on the deformation. The change in voltage relative to the excitation voltage is converted to a change in length expressed by the relative elongation $\varepsilon$ using the formula:

$$\varepsilon = \frac{4}{K} * \frac{\Delta U}{U},$$

where $\Delta U/U$ represents a voltage change relative to the excitation voltage, and K represents the conversion constant. The temperature compensation of data is then performed by changing the conversion constant K in dependence on temperature.

Figure 23 shows sensitivity change waveform of the vibration sensor, namely of the piezoelectric accelerometer. An exemplary embodiment of the temperature compensation step of the data measured by the vibration sensor is carried out in the following manner. The data measured by the vibration sensor are data related to dynamic processes. These processes are measured by changing the charge in piezoelectricity. The charge change is then converted to voltage, which is then converted to acceleration. The temperature compensation of the data is then performed by changing the charge $B_{qa}$:

$$B_{qa} = \frac{q}{a}$$

In another exemplary embodiment of the evaluation process, the evaluation process includes step of data modification. In the step of data modification, the relevant information is separated from the rest of the data. Relevant information is information that describes physical processes that are relevant to a given state. Data modification means at least one operation from the group of noise abatement, data conversion to another space, integration, derivation, signal modulation, signal demodulation, resampling, trending, or static evaluation. An example of noise abatement operation is filtration through a top, bottom, or bandwidth filter, envelope method, and more. Conversion into another space allows for more convenient processing and display of some fault states. An example of conversion to another space is the Fourier Transform in which the time domain signal is converted to the frequency domain. Trends are created based on the result of certain operations performed at individual time points above the signal segment. An example of such operations is the evaluation of the effective value of the measured quantities, the amplitude of the measured quantities, the number of peak values or the wavelength.

In one of the exemplary embodiments of the data modification step, the modified data are the measured data. In another exemplary embodiment of the data modification step, modified data are the processed data.

The evaluation process always includes at least steps of pairing the measured data and step of comparing the processed data with the model states.

In the first exemplary embodiment of the evaluation process step sequence, the evaluation process step sequence is as follows: the temperature compensation step, the step of data modification using the transmission function, the step of pairing the measured data, the step of filtering the processed data, the step of data modification, the step of normalization of the processed data, and the step of evaluating the similarity of the processed data to the model states.

In the second exemplary embodiment of the evaluation process step sequence, the evaluation process step sequence is as follows: the temperature compensation step, the step of data modification using the transmission function, the step of pairing the measured data, and the step of evaluating the similarity of the processed data to the model states.

In the third exemplary embodiment of the evaluation process step sequence, the evaluation process step sequence is as follows: the temperature compensation step, the step of pairing the measured data, the step of data modification using the transmission function, the step of data modification, the step of filtering the processed data, the step of data modification, the step of normalization of the processed data, and the step of evaluating the similarity of the processed data to the model states.

In the fourth exemplary embodiment of the evaluation process step sequence, the evaluation process step sequence is as follows: the temperature compensation step, the step of pairing the measured data and the step of evaluating the similarity of the processed data to the model states.

In the fifth exemplary embodiment of the evaluation process step sequence, the evaluation process step sequence is as follows: the step of data modification using the transmission function, the step of pairing the measured data and the step of evaluating the similarity of the processed data to the model states.

In the sixth exemplary embodiment of the evaluation process step sequence, the evaluation process step sequence is as follows: the step of pairing the measured data and the step of evaluating the similarity of the processed data to the model states.

In the seventh exemplary embodiment of the evaluation process step sequence, the evaluation process step sequence is as follows: the temperature compensation step, the step of pairing the measured data, the step of data modification and the step of evaluating the similarity of the processed data to the model states.

In the eighth embodiment of the evaluation process step sequence, the evaluation process step sequence is as follows: the step of data modification using the transmission function, the step of pairing the measured data, the step of data modification, and the step of evaluating the similarity of the processed data to the model states.

In the ninth exemplary embodiment of the evaluation process step sequence, the evaluation process step sequence is as follows: the step of pairing the measured data, the step of data modification, the step of filtering the processed data, the step of data modification and the step of evaluating the similarity of the processed data to the model states.

In the tenth exemplary embodiment of the evaluation process step sequence, the evaluation process step sequence is as follows: the step of measured data modification, the temperature compensation step, the step of data modification using the transmission function, the step of pairing the measured data, the step of filtering the processed data, the step of data modification, the step of normalization of the processed data and the step of evaluating the similarity of the processed data to the model states.

In the eleventh exemplary embodiment of the evaluation process step sequence, the evaluation process step sequence is as follows: the temperature compensation step, the step of data modification using the transmission function, the step of pairing the measured data, the step of data modification, the step of filtering the processed data, the step of normalization of the processed data and the step of evaluating the similarity of the processed data to the model states.

In the twelfth exemplary embodiment of the evaluation process step sequence, the evaluation process step sequence is as follows: the temperature compensation step, the step of pairing the measured data, the step of data modification using the transmission function, the step of filtering the processed data, the step of data modification, the step of normalization of the processed data and the step of evaluating the similarity of the processed data to the model states.

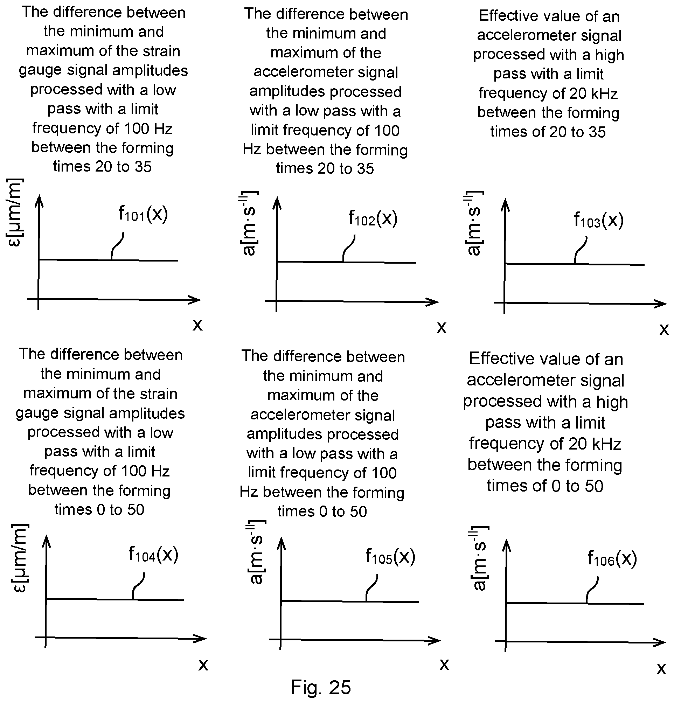

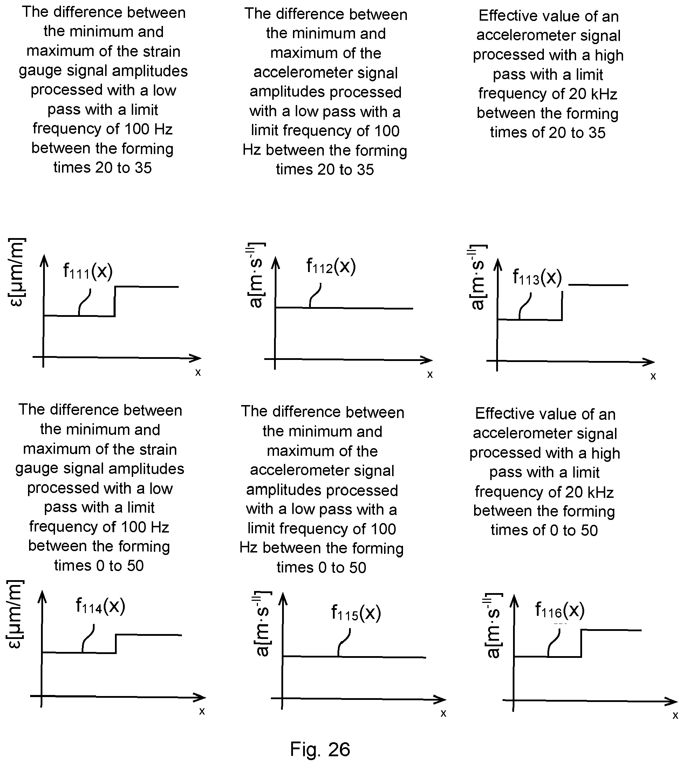

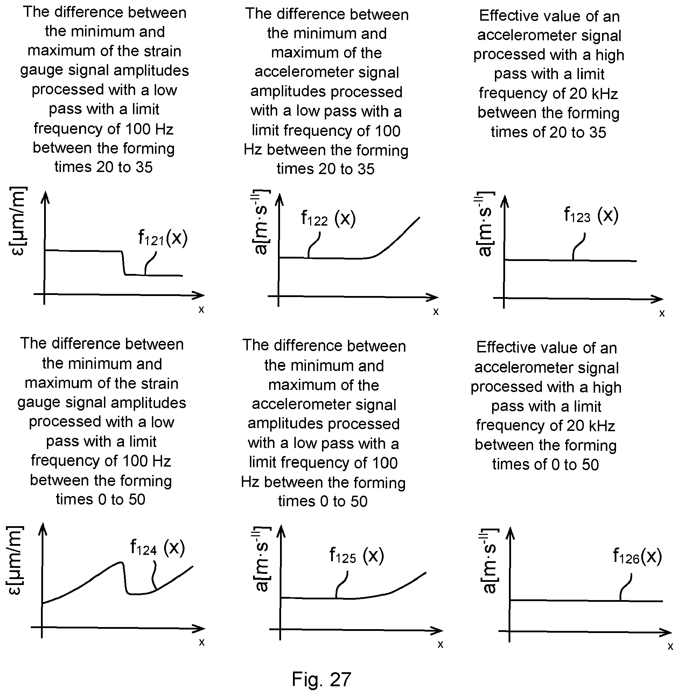

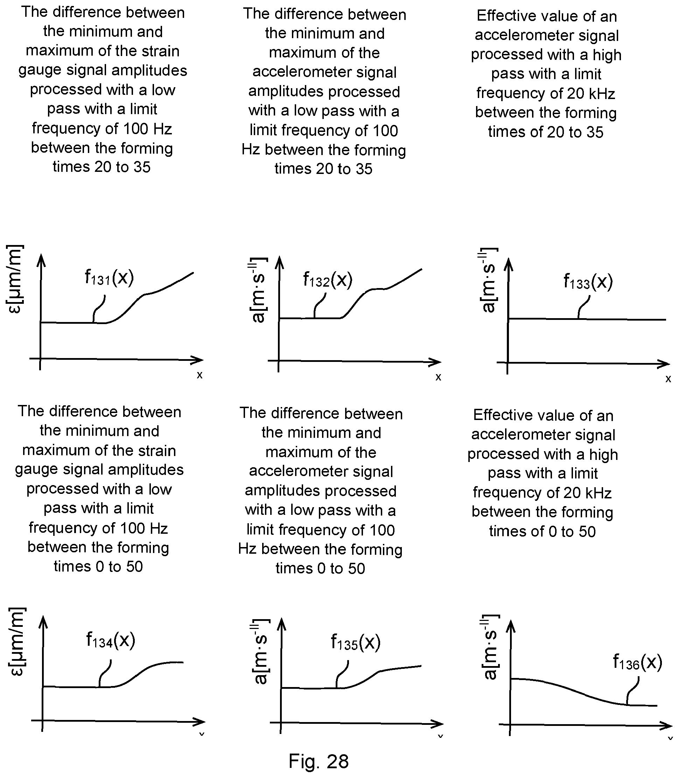

In the first specific embodiment, the forming machine is a crank forging press 54. The sensors used according to this exemplary embodiment are the first piezoelectric accelerometer 27, the semiconductor strain gauge 31, the first temperature sensor 43, and the force sensor 50. All sensors, with the exception of the force sensor 50, are located on the forming part of the crank forging press 54, specifically in the lower die 41. The control part in this exemplary embodiment comprises a monitoring unit. The monitoring unit is directly data connected to the first piezoelectric accelerometer 27, the semiconductor strain gauge 31 and the temperature sensor 43. Further, it is data connected via a machine control system with the force sensor 50 located on the frame 37. The force sensor 50 located on the frame 37 allows the acquisition of data about the size of the forming force. The control part of the diagnostic system consists of monitoring unit and computing device, which is a remote server. Further in this exemplary embodiment, four model states are stored in the memory of the control part: a model fault-free state that includes a plurality of functions $\{f_{101}(x), ..., f_{108}(x)\}$, the waveform of which can be seen in Figures 25, 30 and 31, the model fault state of the higher ductile resistance of the transformed blank which includes a plurality of functions $\{f_{111}(x), f_{118}(x)\}$, the exemplary waveform of which can be seen in Figure 26, the model fault state of a crack in the frame 37 comprising a plurality of functions $\{f_{121}(x), ..., f_{128}(x)\}$, the exemplary waveform of which can be seen in Figure 28, and the model fault state of the crack at the clamp 39, which includes a plurality of functions $\{f_{131}(x), ..., f_{138}(x)\}$, the exemplary waveform of which can be seen in Figure 27. The model fault-free state and the model fault state of the higher ductile resistance of the transformed blank are formed on the basis of previous measurements of the actual behaviour of the forming machine 54 during operation. The model fault state of the crack in the frame 37 and the model fault state of the crack at the clamp 39 are based on the theoretical physical description of the behaviour of the forming machine 54 during operation. Model state waveforms are created using the same processing method as the actual measured data in the description below. The sensor-measured data are measured during the forming process corresponding to the forming process described above. During the forming process, there is a high temperature expansion in the clamp 39, and it is thus necessary to carry out the temperature compensation step first. The temperature compensation step of the semiconductor strain gauge 31 consists of measuring the temperature by the temperature sensor 43 at the measuring point of the semiconductor strain gauge 31 and subsequently utilizing the data to convert the deformation sensitivity coefficient of the semiconductor strain gauge 31. The converted coefficient of strain sensitivity of the semiconductor strain gage 31 according to the instantaneous temperature at the measuring point is then used to convert the values measured by the semiconductor strain gauge 31 to actual strain values. The dependence of the resistance of the semiconductor strain gauge 31 on the deformation and temperature is not linear and is expressed by the equation:

$$R_{\varepsilon,t} = R_{0,t} + R_{0.25} \left[ C_1 \big( \varepsilon + (\alpha_{mat} - \alpha_{Si})(t - 25) \big) + C_2 \big( \varepsilon + (\alpha_{mat} - \alpha_{Si})(t - 25) \big)^2 \right].$$

Resistance further enters the equation (applicable for 25 ° C):

$$K_{\varepsilon,25} = C_1 + 2C_2\varepsilon = \frac{\Delta R}{\Delta \varepsilon}.$$

The final equation of the dependence of deformation sensitivity coefficient on temperature and deformation is as follows:

$$K_{\varepsilon,t} = K_{\varepsilon,25} \left( 1 + \frac{B}{100}(t - 25) \right)$$

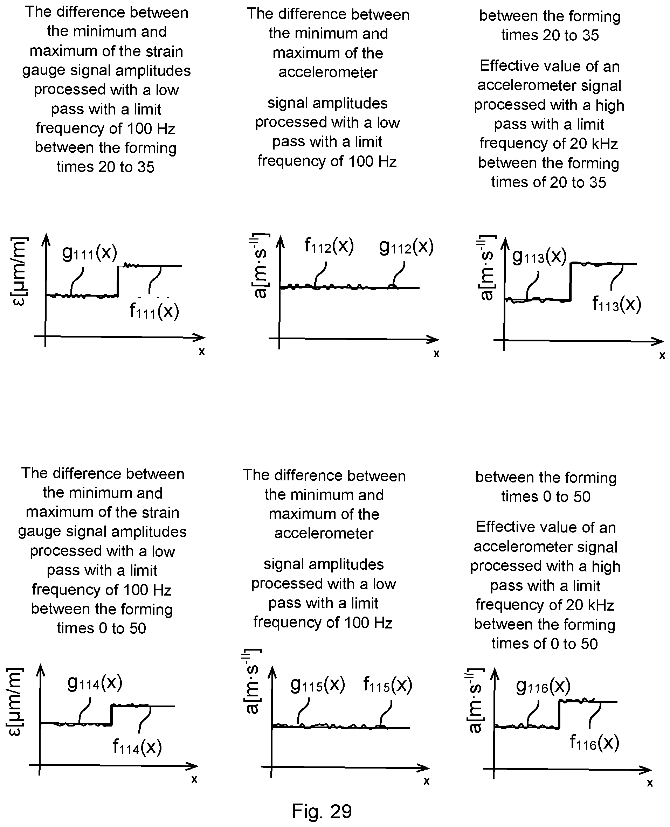

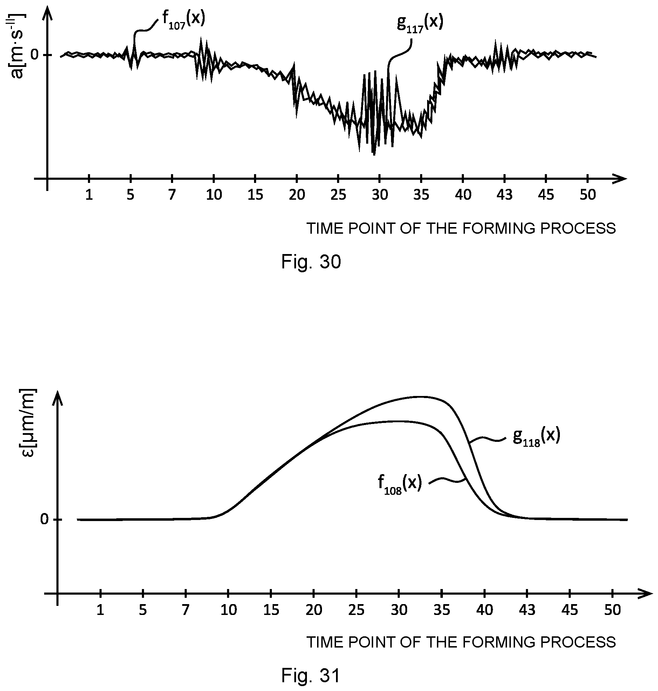

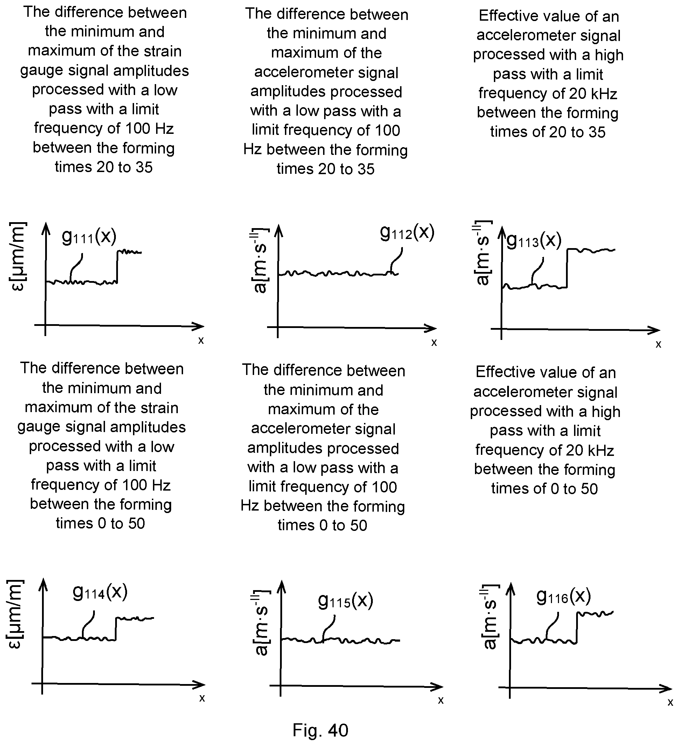

The constants $C_1, C_2$, $B$ are given by the manufacturer and their exact calculation is done empirically. The temperature compensation of the data measured by the semiconductor strain gauge 31 is performed by means of the above-mentioned equations. The second step is to pair the measured data. The third step is the step of modifying the data with time waveforms $g_{117}(x)$, $g_{118}(x)$ shown in Figures 30, 31. The data from the semiconductor strain gauge 31 are filtered through a low pass filter type with a limit frequency of 100 Hz, the resulting data thus carry information about the strain of the clamp during the forming process. Piezoelectric accelerometer 27 data are used for two independent types of modification. The first type of data modification from the piezoelectric accelerometer 27 is a low pass filter type filtration with a limit frequency of 100 Hz, the resulting data thus carry information about the absolute acceleration of the clamp 39. The second type of data modification from the piezoelectric accelerometer 27 is a high pass filter type filtration with a limit frequency of 20 kHz, the resulting data thus carry the information about the shocks, the contact of the forming part and the product and the structure of the product. The fourth step is the step of filtering the processed data where the data measured by the piezoelectric accelerometer 27 and the semiconductor strain gauge 31 are used as filter parameter through which the data measured by the semiconductor strain gage 31 are filtered. During the vibration, it is possible to see a pulse at time point 20, which is caused by the clearance between the machine frame and the forming part. During strain, it is possible to see the maximum strain value at time point 35. Thus, the time interval between time points 20 and 35 is selected as the filter parameter. The result of filtration is, therefore, complete attenuation of the strain waveform at all time points outside the interval between time points 20 to 35. For further processing, the original strain waveform between time points 0 to 50 is also used. The fifth step is the step of data modification. In the fifth step, the processed data are further statistically evaluated, wherein the data from the semiconductor strain gauge 31 are evaluated by the difference between the minimum and maximum amplitudes, the data from the piezoelectric accelerometer 27 modified by the low pass filter type with the limit frequency of 100 Hz are evaluated by the difference between the minimum and maximum amplitudes and the data from the piezoelectric accelerometer 27 modified by a high pass filter type with the limit frequency of 20 kHz are evaluated by calculating the root mean square (RMS) signal value. A set of trends $\{g_{111}(x), ..., g_{116}(x)\}$, which can be seen in Figure 40, is then created from data modified in this way. The sixth step is the step of evaluating the similarity of the processed data $\{g_{111}(x), ..., g_{118}(x)\}$ with a set of model states $\{f_{111}(x), ..., f_{118}(x)\}$. The evaluation of similarity in this exemplary embodiment is carried out by the information interface, which is in this exemplary embodiment a forming machine 54 interface comprising a screen and a user input. As can be seen in Figures 30, 31 and 41, the processed data $\{g_{111}(x), ..., g_{118}(x)\}$ do not correspond to the model fault-free state determined by the set $\{f_{101}(x), ..., f_{108}(x)\}$, since the waveforms are not similar. As can be seen in Figure 29, the processed data $\{g_{101}(x), ..., g_{108}(x)\}$ and the model fault state of the higher ductile resistance of the transformed blank, determined by the set $\{f_{111}(x), ..., f_{118}(x)\}$, are similar. Higher ductile resistance of the transformed blank is caused by the incorrect setting of the forming process parameter, specifically of the forming temperature.

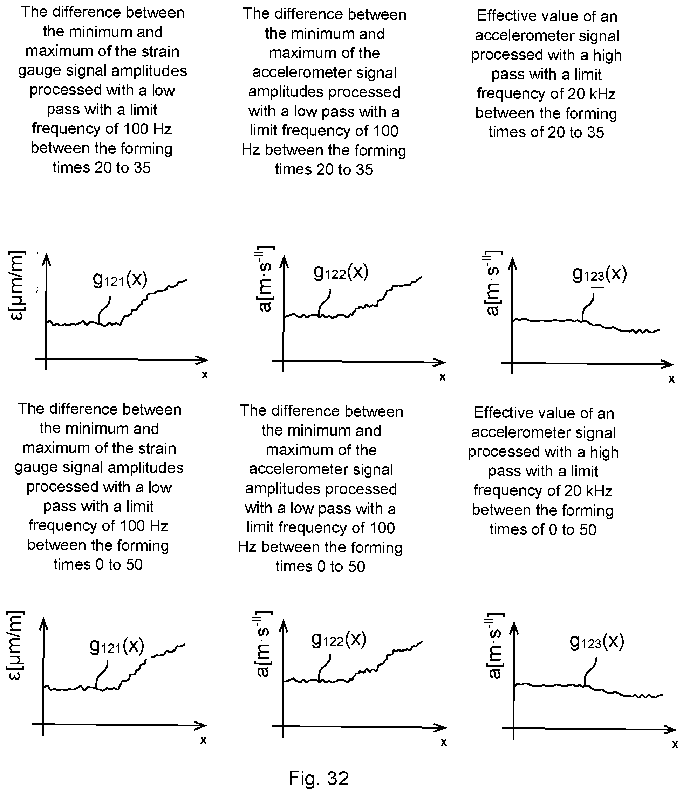

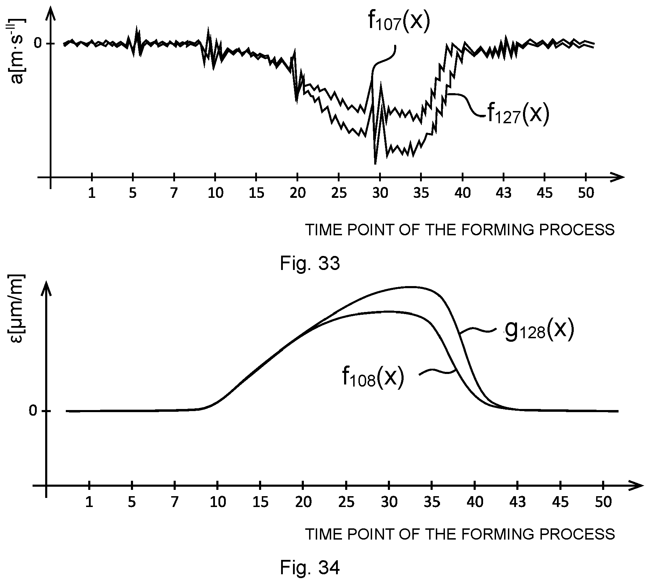

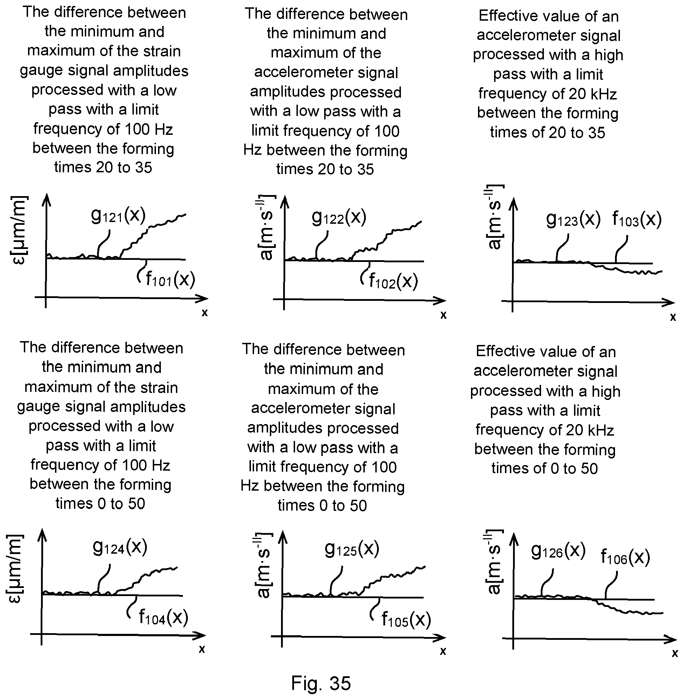

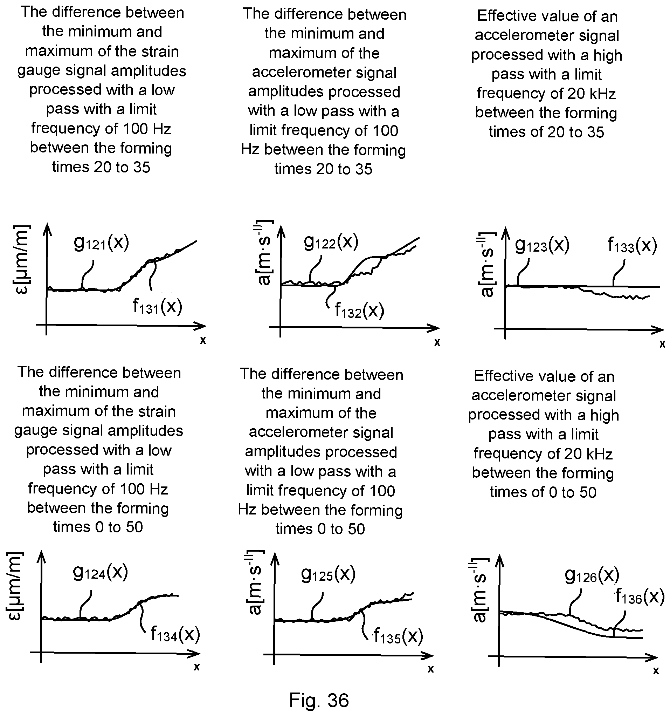

The second specific embodiment, with the exception of the measured data and the sixth step, corresponds to the first specific exemplary embodiment. The sixth step is the step of evaluating the similarity of the processed data to the model states. The evaluation of similarity in this exemplary embodiment is carried out by means of the information interface, which is in this exemplary embodiment a personal computer. As can be seen in Figures 33, 34, 35, the processed data $\{g_{121}(x), ..., g_{128}(x)\}$ shown in Figure 32 do not correspond to the model fault-free state determined by the set $\{f_{101}(x), ..., f_{108}(x)\}$ since the waveforms are not similar. As can be seen in Figure 36, the processed data $\{g_{131}(x), ..., g_{136}(x)\}$ and the model fault state of the crack in the frame $\{f_{131}(x), ..., f_{136}(x)\}$ correspond to each other, since the waveforms are similar. The crack in the frame 37 is in this model fault state is at a frame 37 location approximately below the forming part.

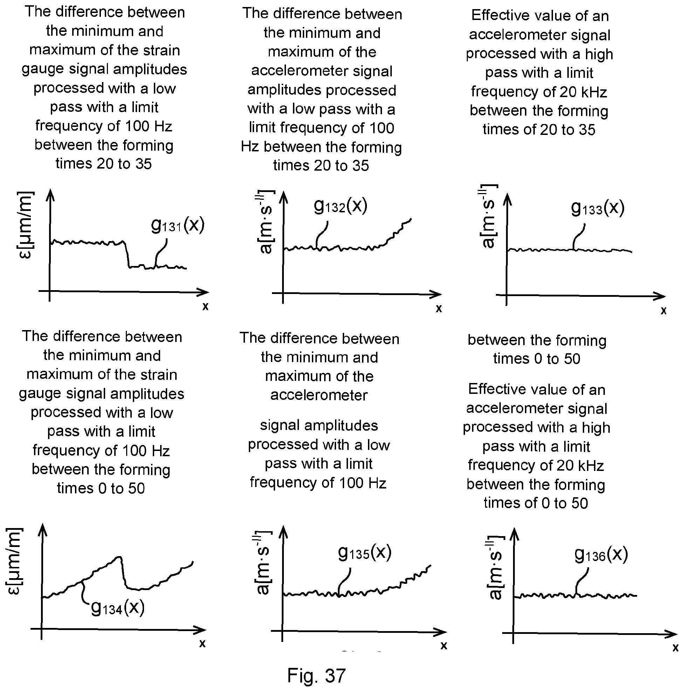

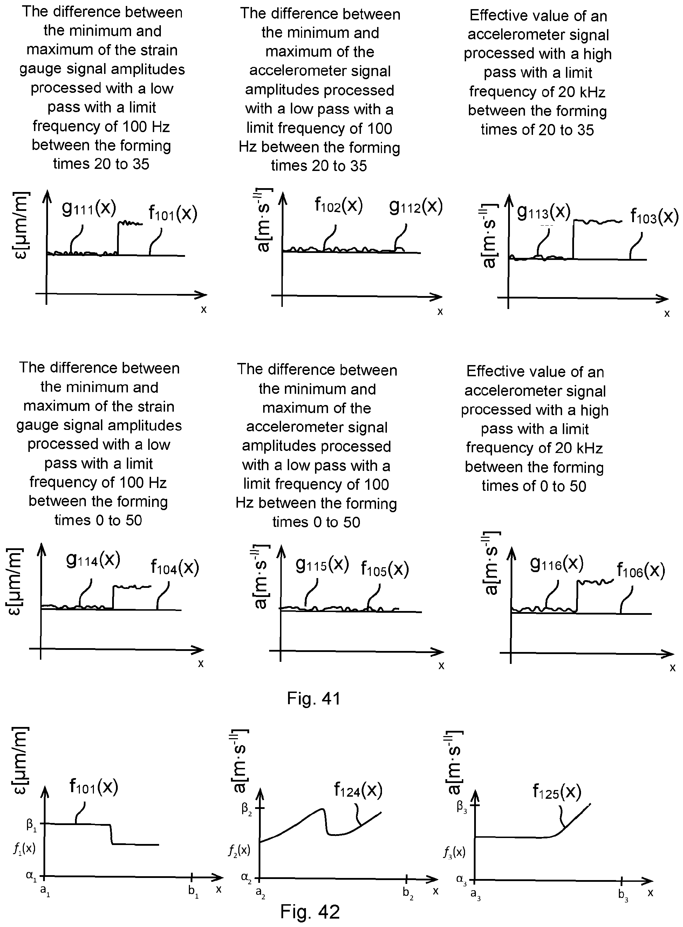

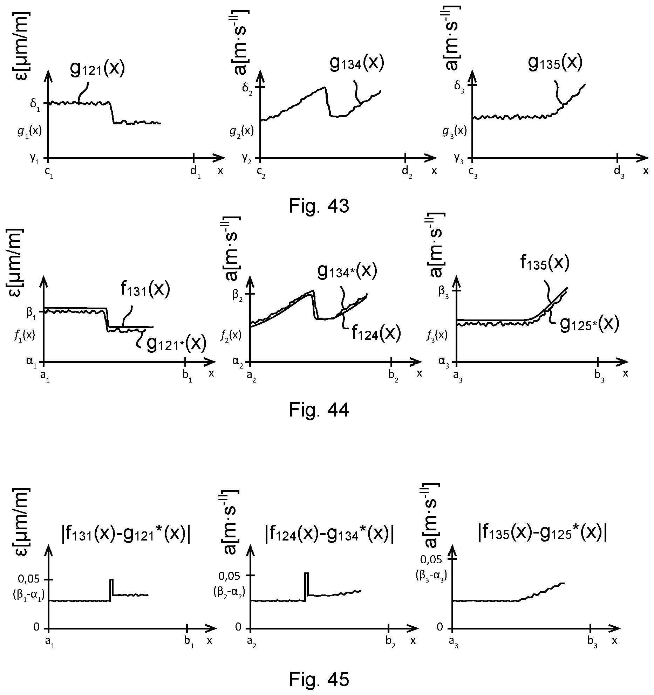

The third specific exemplary embodiment, with the exception of the measured data and the fifth step, corresponds to the first specific exemplary embodiment. The fifth step is the step of normalization of the processed data. Normalization inputs are waveforms of processed data $G_{130}$ and the function set $F_{120}$. The function set $F_{120} = \{f_{121}(x), f_{124}(x), f_{125}(x)\}$ shown in Figure 42 is a subset of the set $\{f_{121}(x), ..., f_{126}(x)\}$, wherein these functions represent the model fault state waveforms of the crack on the clamp 39. Waveforms of the processed data $G_{130} = \{g_{131}(x), g_{134}(x), g_{135}(x)\}$ in Figure 43 are a subset of the set $\{g_{131}(x), ..., g_{138}(x)\}$, shown in Figures 37, 38 and 39. Function $g_{131}(x)$ represents the processed data measured by the semiconductor strain gauge 31 between time points 20 to 35 and modified by a low pass filter type with a limit frequency of 100 Hz. Function $g_{134}(x)$ represents the processed data measured by the semiconductor strain gage 31 between time points 0 to 50 and modified by a low pass filter type with a limit frequency of 100 Hz. Function $g_{135}(x)$ represents the processed data measured by the piezoelectric accelerometer 27 between time points 0 to 50 and modified by a low pass filter type with a limit frequency of 100 Hz. Waveforms of processed data $G_{130}$ are transformed into $G_{130}{}^*$ data waveforms, which have the same definition domain and value domain as the functions of the $F_{120}$ function set. Functions from the $F_{120}$ function set have the definition domain $D(f)_i = \langle a_i, b_i \rangle$ and the value domain $H(f)_i = \langle \alpha_i, \beta_i \rangle$, where i $\in \langle 1, n \rangle$. An example for transforming $g_{134}(x)$ into $g_{134}^{*}(x)$ is the equation:

$$g_{134}^{*} = \frac{g_{134}\left(\frac{x-a_{134}}{b_{134}-a_{134}}*(d_{134}-c_{134})+c_{134}\right)-\gamma_{134}}{\delta_{134}-\gamma_{134}}\left(\beta_{134} - \alpha_{134}\right) + \alpha_{134}; \; x \in \langle a, b \rangle.$$

The sixth step is the step of evaluating the similarity of the processed data with the model states. The evaluation of similarity in this exemplary embodiment is performed by machine on the basis of the input knowledge, namely using the COM function. In this exemplary embodiment, the COM function inputs are the waveforms of the processed data $G_{130}{}^*$ and the set of functions $F_{120}$. Functions from the $F_{120}$ function set represent the waveforms of model fault states of the forming machine part. Functions of the processed data waveforms $G_{130}{}^*$ represent the processed data with the same definition domain and value domain as the functions of the $F_{120}$ function set, as shown in Figure 44. The COM function for this exemplary embodiment is therefore defined by the equations:

$$\underset{x \in \langle A, B \rangle}{COM}[F_{120} @ G_{130}{}^{*}] < E$$

$$\underset{x \in \langle a_1, b_1 \rangle}{COM} [f_{121}(x) @ g^*_{131}(x)] < e_1 \ AND \ \underset{x \in \langle a_2, b_2 \rangle}{COM} [f_{124}(x) @ g^*_{134}(x)] < e_2 \ AND$$

$$AND \ \underset{x \in \langle a_3, b_3 \rangle}{COM} [f_{125}(x) @ g^*_{135}(x)] < e_3$$

Based on the input knowledge, all functions from the $F_{120}$ function set and the processed data waveforms $G_{130}^*$ must be similar so that the function domain of the absolute value of the function differences shown in Figure 45, limited by a 95% quantile of all the lowest values in the function difference definition domain is smaller than 5% of the definition domain. Based on this, the COM function equations can be modified as follows:

$$\underset{x \in \langle a_1, b_1 \rangle}{max 0.95} |f_{121}(x) - g^*_{131}(x)| < e_1 \ AND \ \underset{x \in \langle a_2, b_2 \rangle}{max 0.95} |f_{124}(x) - g^*_{134}(x)| < e_2 \ AND$$

$$AND \ \underset{x \in \langle a_3, b_3 \rangle}{max 0.95} |f_{125}(x) - g^*_{135}(x)| < e_3 = 1 \ AND \ 1 \ AND \ 1$$

The comparison of the functions is shown in Figure 36, the processed data $\{g_{101}(x), ..., g_{136}(x)\}$ and the model fault state of the crack in the clamp 39 $\{f_{131}(x), ..., f_{136}(x)\}$ correspond to each other, since the waveforms are similar. Based on the evaluation result, information is sent to the information interface indicating that the fault is a crack on the clamp 39.

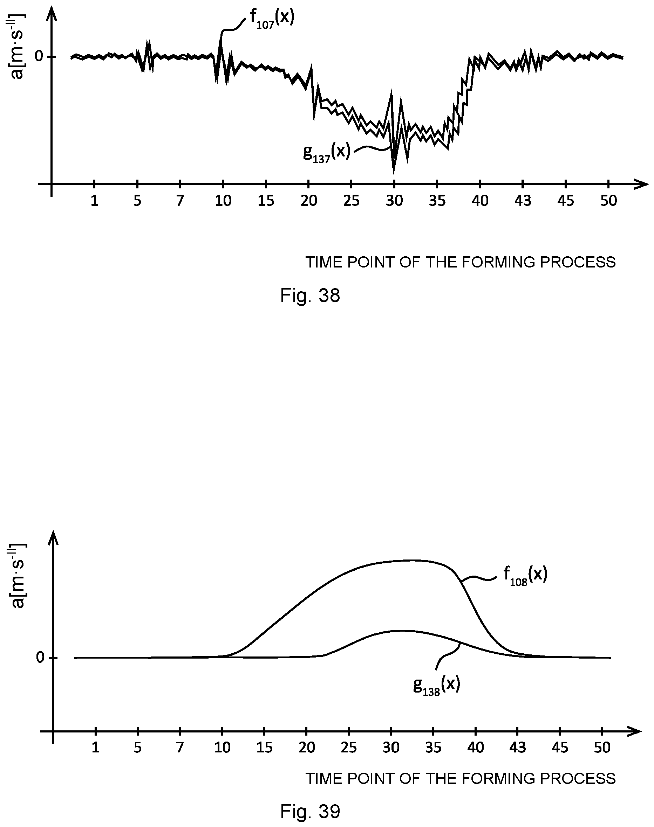

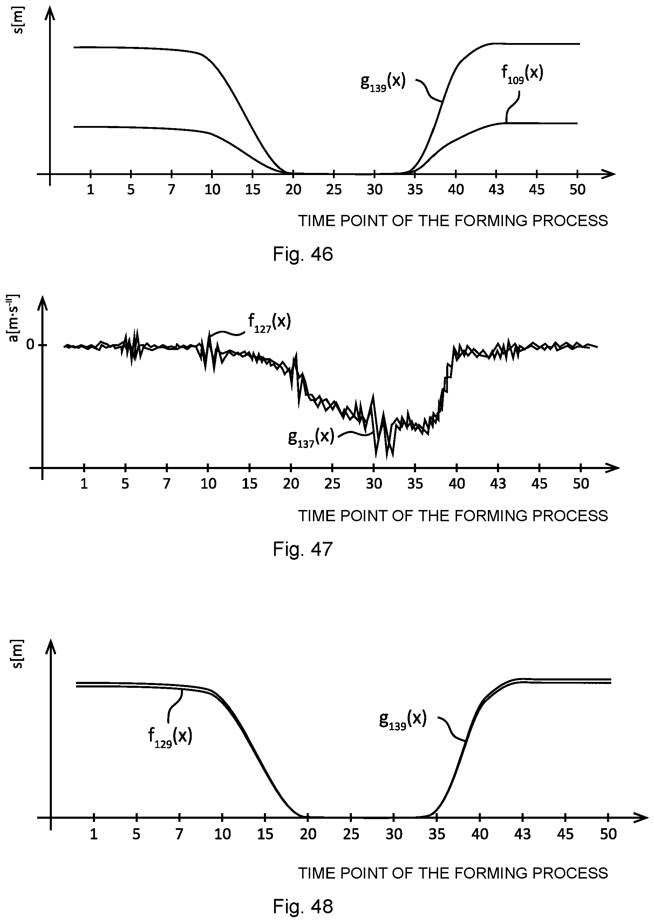

The fourth specific exemplary embodiment corresponds to the third specific exemplary embodiment, with the difference that the semiconductor strain gauge 31 is replaced by the distance sensor 51, an inductive one in this specific exemplary embodiment, which is located in the lower clamp 39 and measures the distance between the lower clamp 39 and the frame 37. In this exemplary embodiment, the model fault-free state is extended by the $f_{109}(x)$ waveform, the model fault state of the higher ductile resistance of the transformed blank was extended by the $f_{119}(x)$ waveform, the model fault state of the crack on the clamp 39 was extended by the $f_{129}(x)$ waveform, the model fault state of the crack in frame 37 was extended by the $f_{139}(x)$ waveform. The added waveforms describe the change in distance between the clamp 39 and the frame 37 during the forming process. The model fault-free state is formed by a set of data $f_{107}(x)$, $f_{109}(x)$. The model fault state of the higher ductile resistance of the transformed blank is formed by a set of data $f_{117}(x)$, $f_{119}(x)$. The model fault state of the crack on the clamp 39 is formed by a set of data $f_{127}(x)$, $f_{129}(x)$. The model fault state of the crack in frame 37 is formed by a set of data $f_{137}(x)$, $f_{139}(x)$. The processed data used in the step of evaluating the similarity of the processed data to the model states are data $g_{137}(x)$ and $g_{139}(x)$ processed in this exemplary embodiment. The evaluation of similarity in this exemplary embodiment is carried out by means of the information interface, which is in this exemplary embodiment a personal computer. As can be seen in Figures 38, 46, the processed data do not correspond to the model fault-free state, since the waveforms are not similar. As can be seen in Figures 47 and 48, the processed data and the model fault state of the crack on the clamp 39 correspond to each other, as the waveforms are similar.

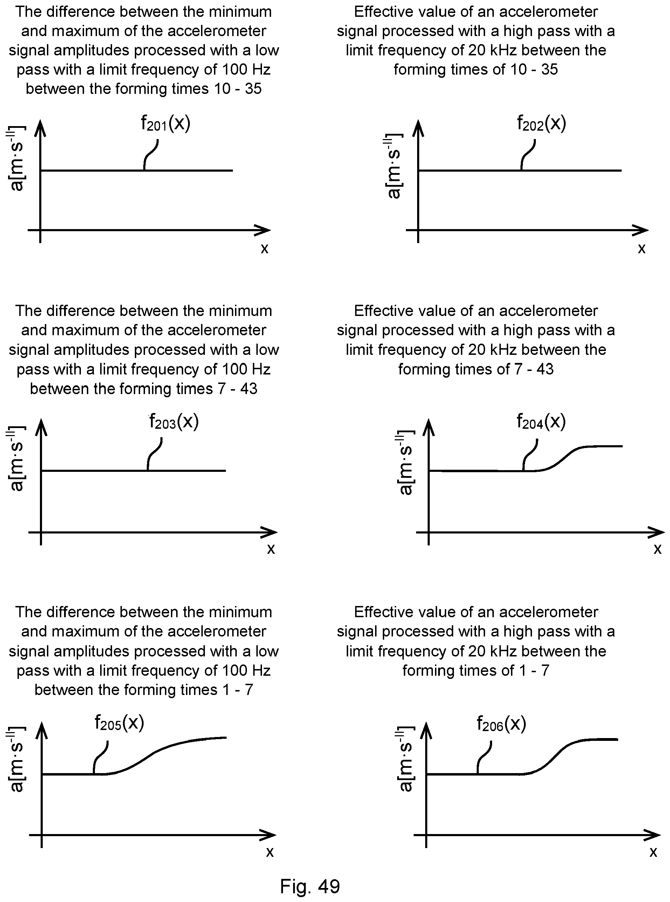

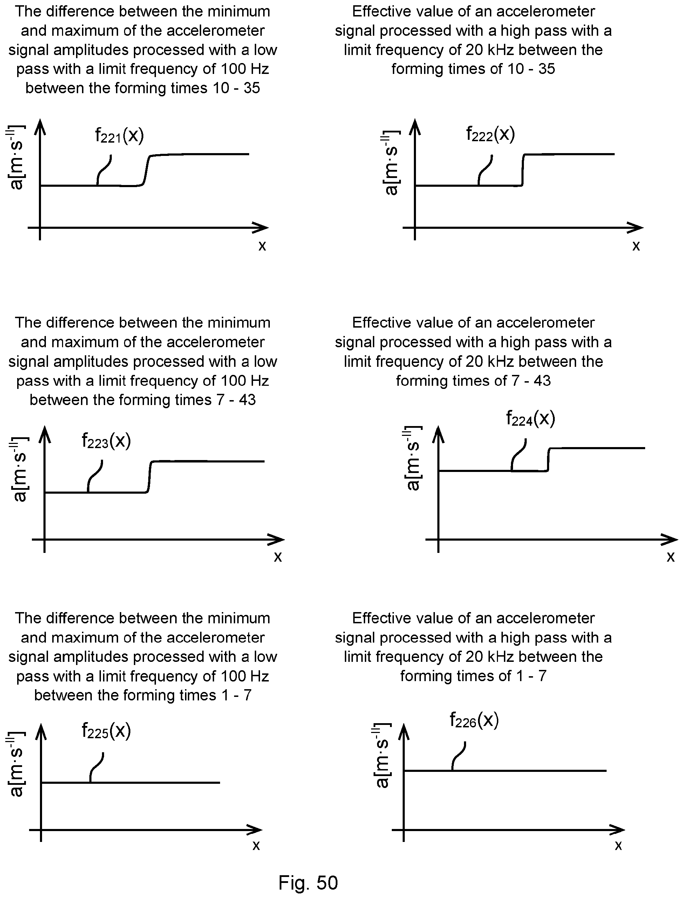

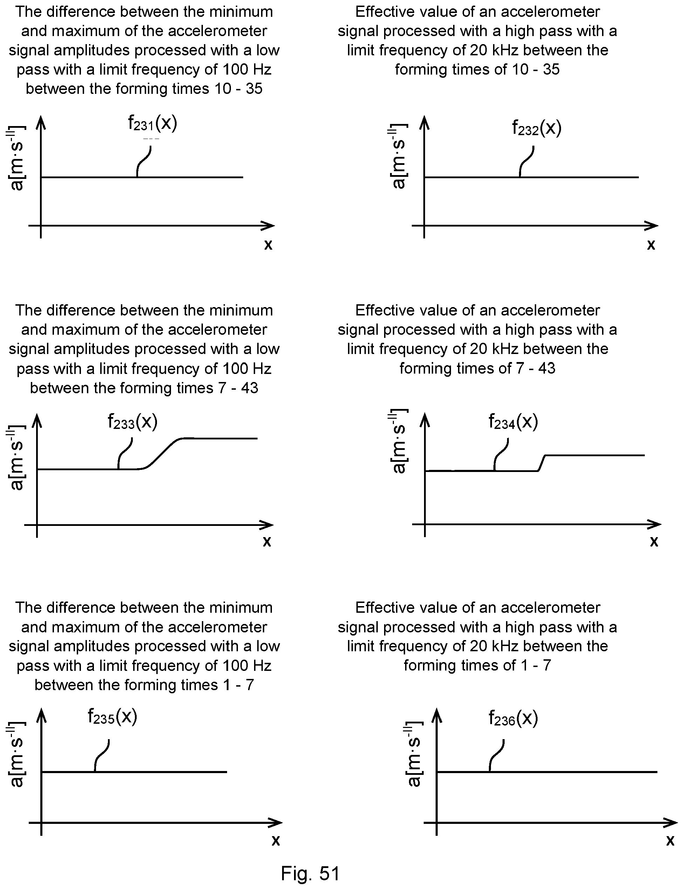

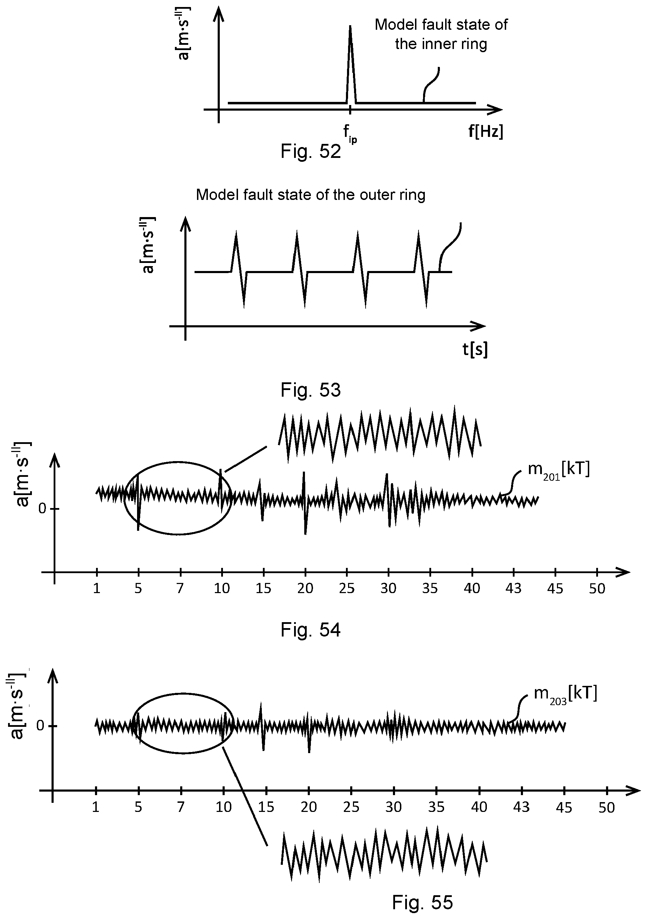

In the fifth specific exemplary embodiment, the forming machine is a crank forging press 54. The sensors used in this exemplary embodiment are five accelerometers, piezoelectric ones in this specific exemplary embodiment, and two temperature sensors. The first accelerometer 27 is located in the lower die 41 and scans the vibrations in the y-axis direction, which is the same as the axis of movement of the ram 36. The second accelerometer 28 is located in the upper tool clamp 42 and scans the vibrations in the y-axis direction. The third accelerometer 29 is located on a roller bearing bedding 38, wherein the roller bearing is a gear roller bearing, and scans vibrations in the y-axis direction. The fourth accelerometer 30 is located in the upper clamp 42 and scans vibrations perpendicular to the direction of the axis of movement of the ram 36, i.e. in the x-axis direction. The fifth accelerometer 53 is located in the lower die 41 and scans vibrations in the x-axis direction. The first temperature sensor 43 is located in the lower die 41 and the second temperature sensor 44 is located on the bedding 38 of the roller bearing. The control part comprises a monitoring unit and a computing device, which, in this exemplary embodiment, is a machine control system. The monitoring unit is directly connected to piezoelectric accelerometers and temperature sensors. Further, in this exemplary embodiment, five model states are stored in the memory of the control part: a model fault-free state, the waveform of which can be seen in Figures 20, 21 and 61, a model fault state of the guide 32 clearance, the waveform of which can be seen in Figure 49, a model fault state of the clamp 39 clearance, the waveform of which can be seen in Figure 51, a model fault state of the inner ring of the bearing, the waveform of which can be seen in Figures 52, 53, and a model fault state of the lower die 41, the waveform of which can be seen in Figure 50. The model fault-free state is formed by machine, based on learned knowledge, wherein the data used for this are obtained by measurements during fault-free operation. The machine creation of the model fault-free state on the basis of the learned knowledge is performed by neural network. By the neural network, the step of pairing the measured data, the step of modifying the processed data, and the step of evaluating the similarity of the processed data to the model states are implemented in this exemplary embodiment. The model fault state of the guide 32 clearance, the model fault state of the clamp 39 clearance and the model fault state of the lower die 41 clearance are formed by the same procedure as described below. The model fault state of the guide 32 clearance, the model fault state of the clamp 39 clearance and the model fault state of the lower die 41 clearance are derived on the basis of the theoretical physical description of the forming machine 54 behaviour during operation adjusted on the basis of previous measurements of the actual behaviour of the forming machine 54 during operation. The derivation is performed by inserting the ram 36 clearance, or the clamp 39 clearance, or the lower die 41 clearance into the refined physical description of the forming machine 54 behaviour and by subsequent simulation of the individual fault states by the finite element method. The simulated waveforms of the fault states are subsequently further processed in a similar way as the measured data, the processing thus involves the step of pairing the measured data, the step of modifying the processed data, the step of filtering the processed data. In the step of modifying the processed data, vibration waveforms are used for two independent types of modification. The first type of vibration waveform modification is filtration through the low pass filter type with a limit frequency of 100 Hz. The second type of vibration waveform modification is filtration by the high pass filter type with a limit frequency of 20 kHz. From the vibration waveforms modified by the first type modification, trends are created by calculating the differences between the minimum and maximum amplitudes. From the vibration waveforms modified by the second type of modification, trends are created by calculating the root mean square (RMS) signal value. The data thus modified are then filtered by the data-filtering step. The vibration waveforms corresponding to the waveform measured by the fifth accelerometer 53 is used for two independent filtrations. During the first filtration, all data outside time points 10 to 35 are filtered off. During the second filtration, all data outside time points 7 to 43 are filtered off. Furthermore, all data outside time points 1 to 7 are filtered off from the vibration waveform corresponding to the waveform measured by the fourth accelerometer 30. In this way simulated and processed waveforms are subsequently stored as a model fault state of the guide 32 clearance, the model fault state of the clamp 39 clearance, and the model fault state of the lower die 41 clearance. The model fault state of the inner ring of the bearing is derived on the basis of the theoretical physical description of the behaviour of the forming machine 54 during operation, wherein this physical description is in this exemplary embodiment represented by the analytical relationship for bearing fault frequencies. The fault frequencies take into account the bearing geometry and the rotation speed of the individual rings. The following equations are used to calculate fault frequencies:

$$f_i = \frac{n_i}{60},$$

$$f_e = \frac{n_e}{60},$$

$$f_{ip} = \left| \frac{z}{2} \left[ 1 + \frac{D_W}{P} \cos \alpha \right] (f_i - f_e) \right|,$$

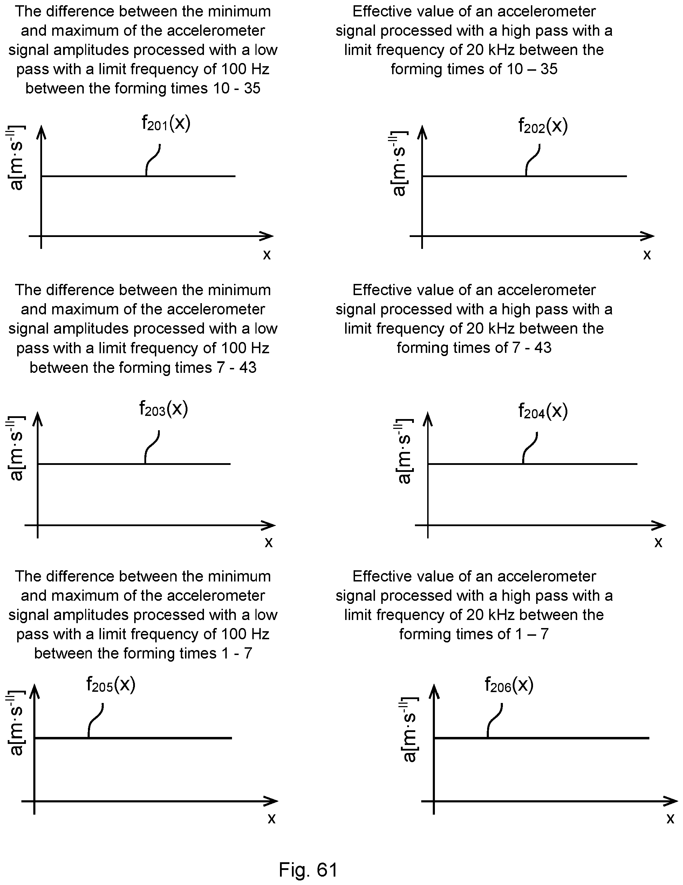

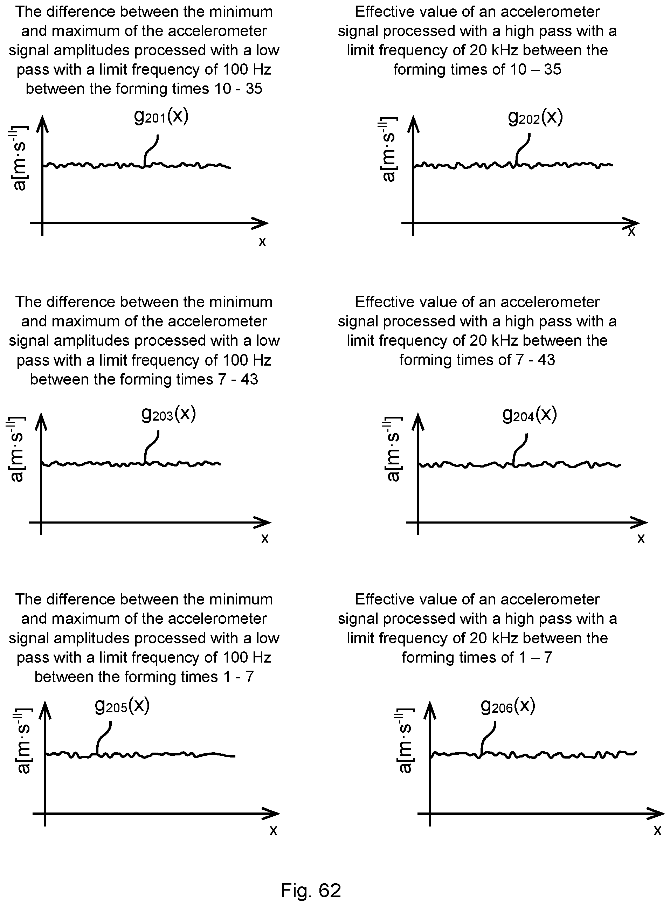

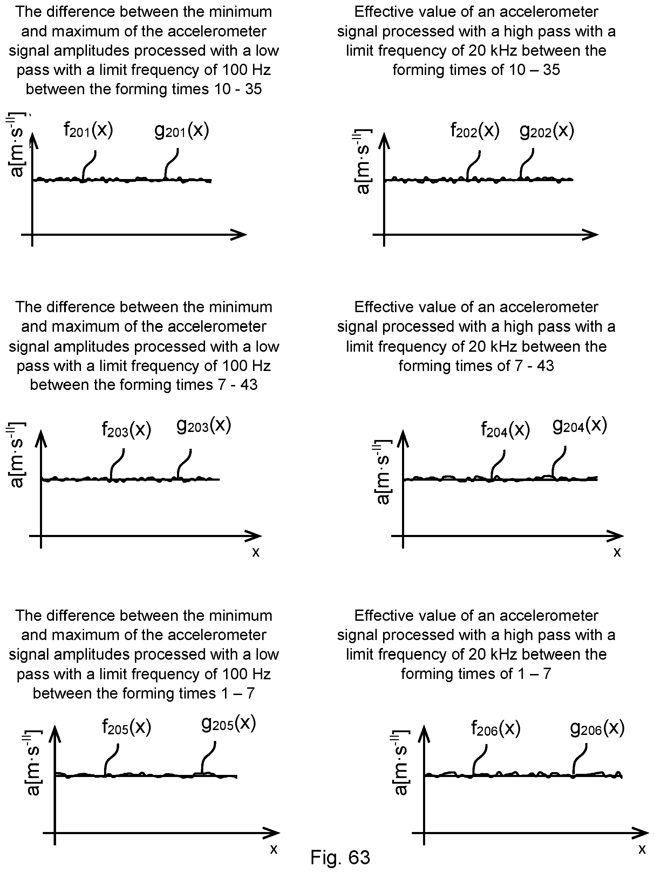

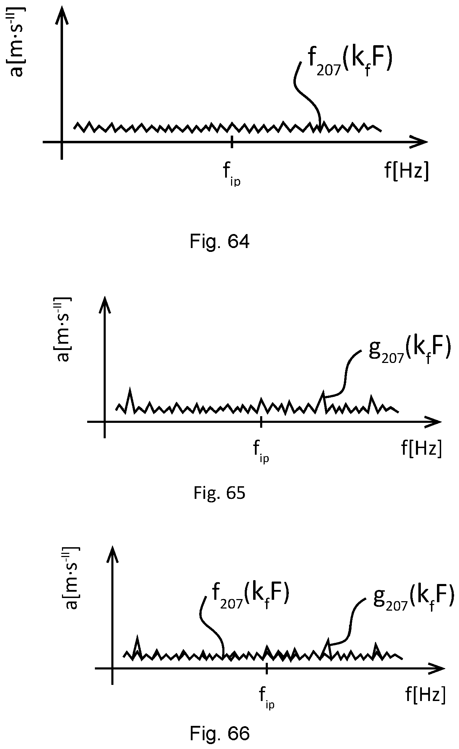

where ni [RPM] indicates the internal ring rotation speed, $n_e$ [RPM] indicates the outer ring rotation speed, $f_{ip}$ [Hz] indicates the internal ring fault frequency, P [mm] indicates the rolling element pitch, $D_w$ [mm] the diameter of the rolling element, z [-] indicates the number of rolling elements in a row, $\alpha$ [°] indicates the contact angles of the rolling element, fi [Hz] indicates the internal ring rotation frequency, $f_e$ [Hz] indicates the outer ring rotation frequency. In order to determine the actual rotation speed of the inner ring or outer ring of the bearing, the monitoring unit is further connected to the engine inverter. Data measured by accelerometers 27, 29 and temperature sensors 43, 44 are evaluated by evaluation process comprising temperature compensation step, step of pairing the measured data, step of data modification using the transmission function, step of filtering the processed data, step of data modification and step of evaluating the similarity of the processed data to the model states. The step of evaluating similarity of the processed data to the model states is in this exemplary embodiment performed by machine on the basis of learned knowledge through neural network. The decision algorithm of the neural network is created on the basis of processed data and model states, where the physical significance of the processed data and model states correspond to each other. As can be seen in Figures 63 and 66, in this exemplary embodiment, the processed data $\{g_{201}(x), ..., g_{207}(x)\}$ shown in Figures 62 and 65 are similar to the model fault-free state $\{f_{201}(x), ..., f_{207}(x)\}$, which is shown in Figures 61 and 64. The neural network thus informs the information interface that the forming machine 54 is in fault-free state.

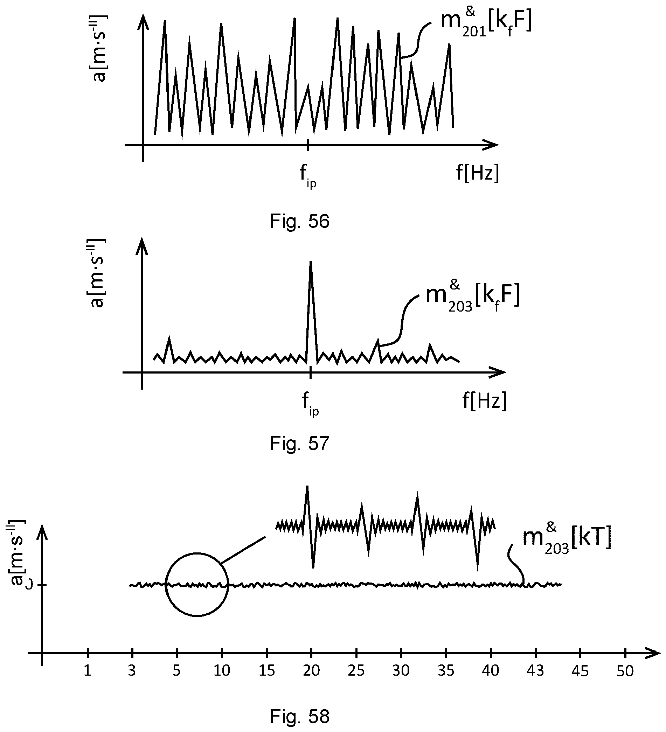

The sixth specific exemplary embodiment, with the exception of the measured data waveforms and the evaluation process, corresponds to the fifth specific exemplary embodiment. The data measured by the first accelerometer 27 are in the form of $m_{201}(kT) = \{m_{201}(1T),.., m_{201}(nT)\}$, as can be seen in Figure 54, and after the Fourier transform, the same data are $m_{201}(k_fF) = \{m_{201}(1F),...,m_{201}(mF)\}$, as can be seen in Figure 56, the data measured by the third accelerometer 29 are in the form of $m_{203}(kT) = \{m_{203}(1T),.., m_{203}(nT)\}$, as can be seen in Figure 55 and in the form of $m_{203}(k_fF) = \{m_{203}(1F),..., m_{203}(mF)\}$, the data measured by the first temperature sensor 43 are in the form of $m_{218}(kT) = \{m_{218}(1T),.., m_{218}(nT)\}$, the data measured by the second temperature sensor 44 are in the form of $m_{219}(kT) = \{m_{219}(1T),.., m_{219}(nT)\}$, wherein n is the number of measured values, T s the measurement period, m is the number of discrete frequencies, and F is the period between individual frequencies. Data measured by accelerometers 29, 17 and temperature sensors 44, 43 are evaluated by the evaluation process comprising temperature compensation step, step of pairing the measured data, the step of data modification using the transmission function, the step of filtering the processed data, step of modification of the processed data and step of evaluating the similarity of the processed data to the model states, respectively. To modify the data using the transmission function, it is necessary to obtain the transmission function first. The transmission function $TF_{13}(z)$ is in this exemplary embodiment obtained experimentally, specifically by means of impulse response, wherein the impulse in this exemplary embodiment is a shock caused by stroke of the ram 36 through the blank to the frame 37. Alternatively, the shock may be created artificially. In order to determine the transmission function, the processed data $m_{201}^{\#}(kT) = \{m_{201}^{\#}(1T),..,m_{201}^{\#}(nT)\}$, where n is the number of measured values and T is the measurement period are used, wherein this measurement period corresponds to the measurement period of the first accelerometer 27. To determine the transmission function, the data $m_{203}^{\#}(kT) = \{m_{203}^{\#}(1T),..,m_{203}^{\#}(nT)\}$, where n is the number of measured values and T is the measurement period are further used, wherein the measurement period corresponds to the measurement period of the third accelerometer 29. Measurement of data $m_{201}^{\#}(kT)$ and $m_{203}^{\#}(kT)$ begins before the impulse and ends with the end of its propagation through the material. Measurement takes place in the fault-free state of the forming machine 54. Discrete measured signals are converted by Z-transformation into complex domain. First, a direct Z-transformation is used according to the rule:

$$M_i(z) = Z\{m_i(kT)\} = \sum_{k=0}^{n} m_i(kT)z^{-k} = m_i(0) + m_i(T)z^{-1} + m_i(2T)z^{-2} + \cdots$$

Through direct Z-transformation, a continuous function of the complex variable $M_i(z)$ from the function $m_i(kT)$ is obtained, thus obtaining the function $M_{201}^{\#}(z)$ and $M_{203}^{\#}(z)$. To derive the transmission function $TF_{13}(z)$ describing signal transmission by the forming machine 54 between the first accelerometer 27 and the third accelerometer 29, the measured discrete data from both accelerometers are used. Measured data from the first accelerometer 27 $M_{201}^{\#}(z)$ represent impulse. Measured data from the third accelerometer 29 $M_{203}^{\#}(z)$, which is located on the roller bearing bedding 38, represent the same impulse affected by the passage through the forming machine 54.

The transmission function $TF_{13}(z)$ is obtained from knowledge of both discrete signals and can be expressed as

$$TF_{13}(z) = \frac{M_{203}^{\#}(z)}{M_{201}^{\#}(z)},$$

where $M_{201}^{\#}(z)$ is input signal, $M_{203}^{\#}(z)$ is output signal and $TF_{13}(z)$ is transmission function in the Z-transformation domain. The first step of the evaluation process is the temperature compensation step of data measured by the first accelerometer 27 $m_{201}(kT)$ and by the third accelerometer 29 $m_{203}(kT)$ using data measured by the first temperature sensor 43 $m_{218}(kT)$ and by the second temperature sensor 44 $m_{219}(kT)$. The change in temperature sensitivity is described by the relation $C_\Delta(K)$, where K is the temperature. Data $m_{201}^{\%}(kT)$ and $m_{203}^{\%}(kT)$ are obtained through temperature compensation. Temperature compensation can be described by equations:

$$m^{\%}_{201}(\mathrm{kT}) = m_{201}(kT)C_\Delta\big(m_{218}(kT)\big),$$

$$m^{\%}_{203}(\mathrm{kT}) = m_{203}(kT)C_\Delta\big(m_{219}(kT)\big).$$

The second step of the evaluation process is the step of pairing the measured data $m^{\%}_{201}(kT)$ and $m^{\%}_{203}(kT)$, where each $m^{\%}_{201}(kT)$ value is assigned a corresponding $m_{203}(kT)$ value. The processed $m^{\%}_{201}(kT)$ data are transformed using the transmission function to $M^{\mathrm{TF13}}_{201}(z)$ data. The transformation is done by multiplying $M^{\%}_{201}(z)$ and $TF_{13}(z)$, thus, the transformation can be expressed by the equation:

$$M^{\mathrm{TF13}}_{201}(z) = \big(M^{\%}_{201}(z)\big)TF_{13}(z).$$

Transformed $M^{\mathrm{TF13}}_{201}(z)$ data in the complex domain can be converted into the time domain by the reverse Z-transformation according to equation:

$$m^{\mathrm{TF13}}_{201}(kT) = Z^{-1}\{M^{\mathrm{TF13}}_{201}(z)\} = \frac{1}{2\pi j}\oint_C M^{TF13}_{201}(z)z^{k-1}dz.$$

Curve C includes all poles of $M^{\mathrm{TF13}}_{201}(z)z^{k-1}$. The third step is the step of filtering the processed data, with data $m^{\%}_{201}(kT)$ and $m^{\mathrm{TF13}}_{201}(kT)$ being deducted from each other, resulting in processed data $m^{\&}_{203}(kT)$ in Figure 58. The step of filtering the processed data can therefore be expressed by equation:

$$m^{\&}_{203}(kT) = m^{\%}_{203}(kT) - m^{\mathrm{TF13}}_{201}(kT).$$

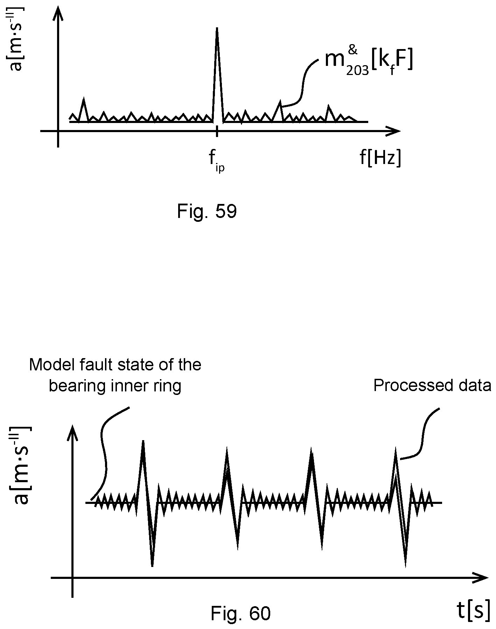

The fourth step is the step of modifying the processed data, in which frequencies other than the fault frequency of the inner ring $f_{ip}$ are suppressed by filtration in the processed data $m^{\&}_{203}(kT)$. The fifth step is the step of evaluating the similarity of processed data to model states. In the fifth step, a Fourier transform is performed and the data $m^{\&}_{203}(k_f F)$ in Figure 57 are compared in the frequency domain, wherein the comparison is performed by machine on the basis of the input knowledge. The bearing internal ring fault frequency will manifest itself only in case of its fault. As can be seen in Figures 59 and 60, in this exemplary embodiment, the processed data and the model fault state of the bearing inner ring are similar, and the neural network thus informs the information interface that the forming machine 54 is in the model fault state of the bearing inner ring.

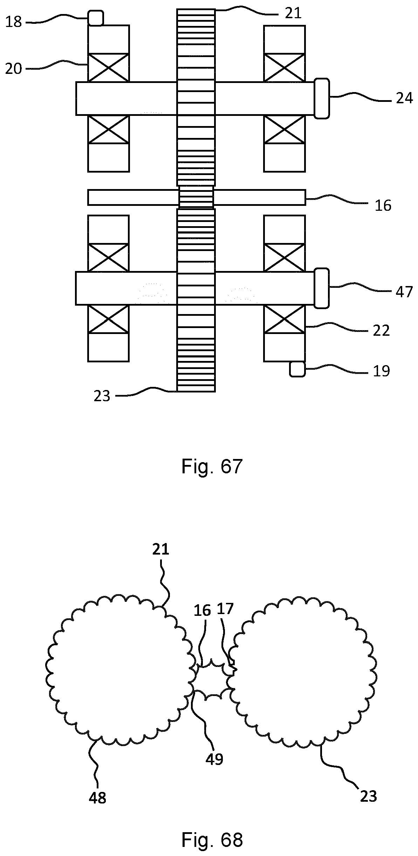

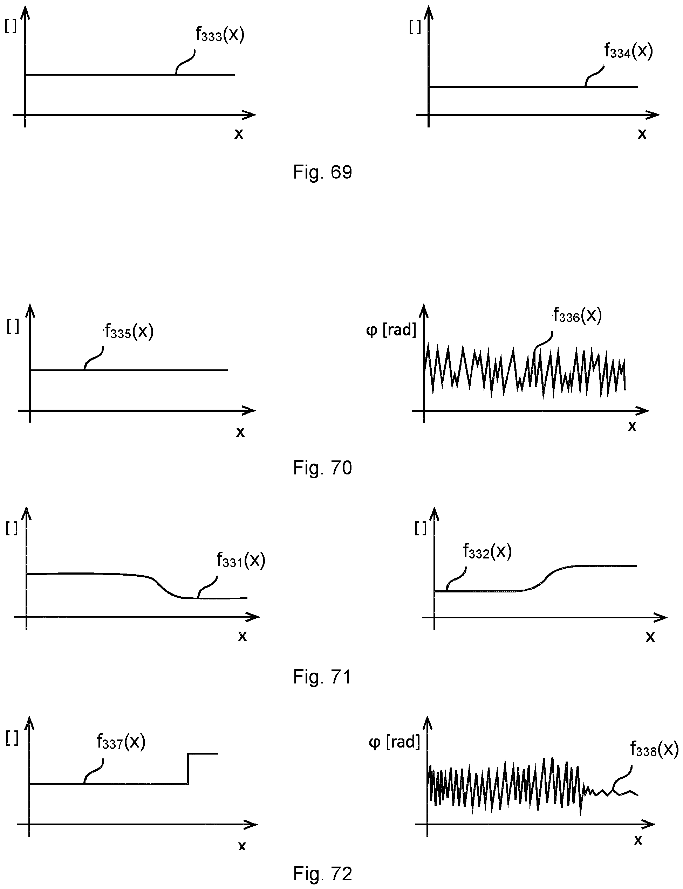

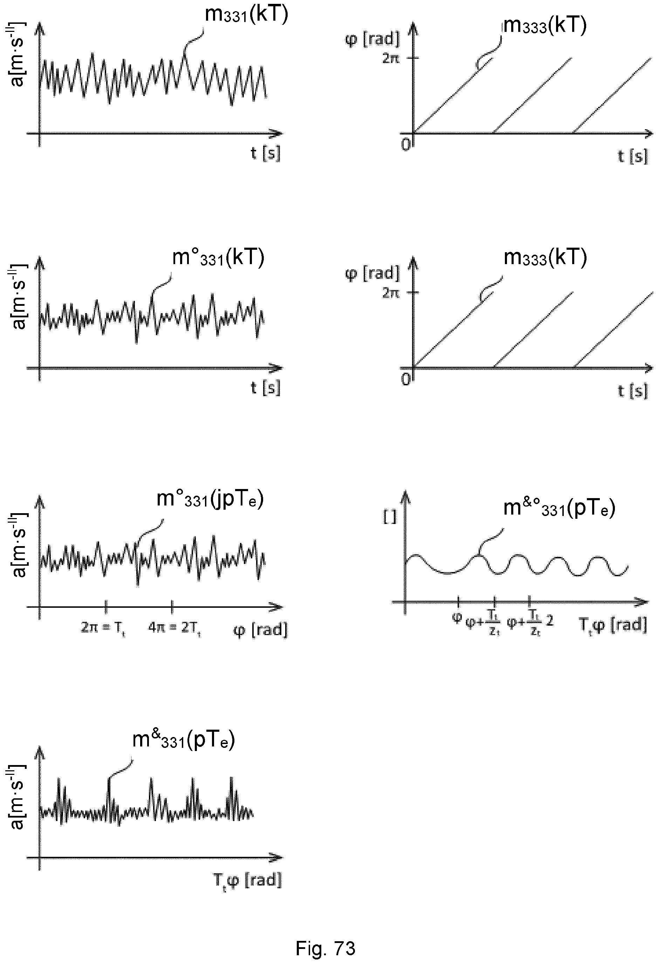

In the seventh specific exemplary embodiment, the forming machine is a two-tool rolling machine from Figure 67. The sensors used in this exemplary embodiment are two piezoelectric accelerometers 18, 19 and two rotary encoders 24, 47. The first piezoelectric accelerometer 18 is placed on the first roller bearing 20 of the first tool 21 and scans the vibrations of the first tool 21, the second piezoelectric accelerometer 19 is placed on the second roller bearing 22 of the second tool 23 and scans the vibrations of the second tool 23, the first rotary encoder 24 is placed on the first tool 21 and scans the position of the first tool 21, the second rotary encoder 47 is placed on the second tool 23 and scans the position of the second tool 23. The control part includes the monitoring unit and the computing device. The computing device is in this exemplary embodiment a remote server. The monitoring unit is directly data connected to the piezoelectric accelerometers 18, 19, and via the machine control system it is data connected to the rotary encoders 24, 47. The direct data connection of the monitoring unit with the piezoelectric accelerometers 18, 19 is in this exemplary embodiment provided by wires. The movement of tools 21, 23 during the forming process, in this exemplary embodiment, consists of rotary movement and of translational movement. The rotary movement of tools 21, 23 is a rotary movement around their own axis. The translational movement of tools 21, 23 is a translational movement towards each other. By combining the rotary and translational movements of the tools 21, 23, the individual tool teeth 48 are pushed into the blank 16 shown in Figure 68. Vibrations occur at contact point 49 of the tool and the formed product during pushing of each tooth 48. In this exemplary embodiment, three model states are stored in the memory of the control part: the model fault-free state including $\{f_{333}(x), f_{334}(x), f_{335}(x), f_{336}(x)\}$, the waveform of which can be seen in Figures 69, 70, the model fault state of the tool tooth damage including $\{f_{331}(x), f_{332}(x)\}$, the waveform of which can be seen in Figure 71, the model fault state of the crack in the blank including $\{f_{337}(x), f_{338}(x)\}$, the waveform of which can be seen in Figure 72. The model fault state of the tool tooth damage is derived using the theoretical physical description of the behaviour of the forming machine during operation, wherein the simulated waveform $m_{301}(kT)$, where $k$ is the measurement step and $T$ is the measurement period and which can be seen in Figure 73, corresponds to the waveforms measured by the first piezoelectric accelerometer 18 and the simulated waveform $m_{333}(kT)$, where $k$ is the measurement step and $T$ is the measurement period and which can be seen in Figure 73, corresponds to the waveforms measured by the first rotary encoder 24. The waveforms thus simulated are further processed by steps that are identical to the steps of the evaluation process. The simulated waveforms are first modified by the step of data modification. In this step, the simulated waveform $m_{331}(kT)$ is filtered by a high pass filter type with a limit frequency of 20 kHz, resulting in a $\overset{\circ}{m}_{331}(kT)$ function. The second step is the step of pairing the measured data, where corresponding value of function $\overset{\circ}{m}_{331}(kT)$ is assigned to each value of the simulated waveform $m_{333}(kT)$. The third step is the step of filtering the processed data, wherein the filter parameters are determined by the processed simulated waveform $m_{333}(kT)$ and the function $\overset{\circ}{m}_{331}(kT)$ is processed by the filtered data. The filtration is carried out so that the time variable $kT$ of the processed simulated waveform $\overset{\circ}{m}_{333}(kT)$ is applied on the time variable $kT$ of the processed function $\overset{\circ}{m}_{331}(kT)$, thereby obtaining function $\overset{\circ}{m}_{331}(jpT_e)$, where $j$ is the order of the tool rotation, $p$ is the positioning step and $T_e$ is the position measurement period. Then, for each p, the arithmetic mean of the absolute value at the given point is obtained and the function $\overset{\&}{m}_{331}(pT_e)$ is obtained, where $p$ is the positioning step and $T_e$ is the position measurement period, which can be expressed by the equation:

$$m_{331}^{\&}(pT_e) = \frac{1}{j}\sum_{1}^{j}|m_{331}(jpT_e)|.$$

The obtained function $m_{331}^{\&}(pT_e)$ has suppressed noise and highlighted status information. The fourth step is the step of data modification. In this step, demodulation of $m_{331}^{\&}(pT_e)$ function is performed by means of bandpass filtering comprising a frequency corresponding to the number of teeth z on tool 21, the result of this step being the processed function $m_{331}^{\&\circ}(pT_e)$. The frequency corresponding to the number of teeth $z_t$ on the tool 21 is supposed to mean the reversed value of the number of teeth of the tool 21 in the time domain, which touch the product 16 in one second. The processed function $m_{331}^{\&\circ}(pT_e)$ is further statistically evaluated in the fifth step of the data modification by determining the minimum $\varphi$ of the function, then dividing the function from the given minimum $\varphi$ point into z identical intervals of the size of $\frac{2\pi}{z_t}$. A local maximum is determined on each interval $z_i$. The result is a set of local maxima. The set is further statistically evaluated and the minimum and standard deviation are determined. From these values, trends are compiled, represented by the functions of the minima from the maxima $f_{331}(x)$ and the standard deviations of the maxima $f_{332}(x)$. These trends constitute a model fault state of the tool teeth damage. The fault-free model state is created by similar procedure and is therefore represented by set of two functions, the first function being the function of the smallest maxima $f_{333}(x)$ and the second function being the function of the standard deviations of the maxima $f_{334}(x)$.

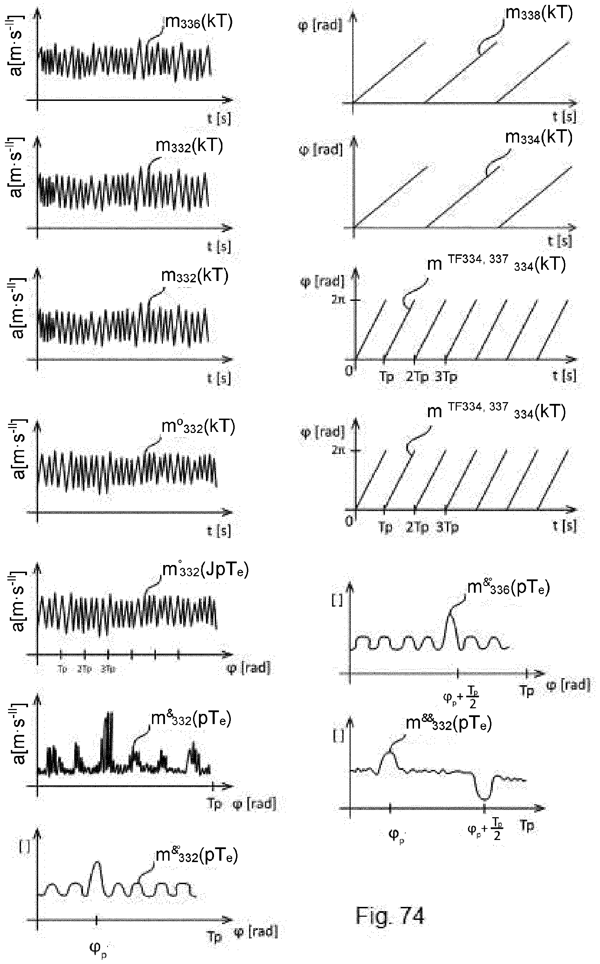

The model fault state of the crack in the blank is derived using the theoretical physical description of the behaviour of the forming machine during operation, wherein the simulated waveform $m_{336}(kT)$, where $k$ is the measurement step and $T$ is the measurement period and which can be seen in Figure 74, corresponds to the waveforms measured by the first piezoelectric accelerometer 18, the simulated waveform $m_{332}(kT)$, where $k$ is the measurement step and $T$ is the measurement period and which can be seen in Figure 74, corresponds to the waveforms measured by the second piezoelectric accelerometer 19, the simulated waveform $m_{338}(kT)$, where $k$ is the measurement step and $T$ is the measurement period and which can be seen in Figure 74, corresponds to the waveforms measured by the first rotary encoder 24 and the simulated waveform $m_{334}(kT)$, where $k$ is the measurement step and $T$ is the measurement period and which can be seen in Figure 74, corresponds to the waveforms measured by the second rotary encoder 47. The steps thus simulated are further processed by steps that are identical to the steps of the evaluation process. In the first step, the simulated waveforms are modified by the data modification step using the transmission function. The transmission function $TF_{334,337}$, is applied to the simulated waveform $m_{334}(kT)$, which is obtained on the basis of the theoretical physical description of the behaviour of the forming machine during operation. This step can be expressed by equation:

$$m_{334}^{TF334,337}(kT) = m_{334}(kT)\,TF_{334,337}$$

The second step is the step of data modification, where the simulated waveform $m_{332}(kT)$ is modified by a high pass filter type with a limit frequency of 20 kHz, resulting in the function $\overset{\circ}{m}_{332}(kT)$. The third step is the step of pairing the measured data, where a corresponding value of function $m_{334}^{TF334,337}(kT)$ is assigned to each value of function $\overset{\circ}{m}_{332}(kT)$. The fourth step is the step of filtering the processed data, wherein the filter parameters are determined by the processed function $m_{334}^{TF334,337}(kT)$ and the filtered data is the processed function $\overset{\circ}{m}_{332}(kT)$. The filtration is carried out so that the time variable $kT$ of the processed function $m_{334}^{TF334,337}$ is applied on the time variable $kT$ of the processed function $\overset{\circ}{m}_{332}(kT)$ thereby obtaining function $\overset{\circ}{m}_{332}(jpT_e)$, where $j$ is the order of the tool 47 rotation, $p$ is the positioning step and $T_e$ is the position measurement period. Then, for each p, the arithmetic mean of the absolute value at the given point is obtained and the function $\overset{\&}{m}_{332}(pT_e)$ is obtained, where $p$ is the positioning step and $T_e$ is the position measurement period, which can be expressed by equation:

$$m_{332}^{\&}(pT_e) = \frac{1}{j}\sum_{1}^{j}|m_{332}(jpT_e)|$$

The obtained function $\overset{\&}{m}_{332}(pT_e)$ has suppressed noise and highlighted status information. The fifth step is the step of data modification. In this step, demodulation of function $\overset{\&}{m}_{332}(pT_e)$ is performed by means of bandpass filtering comprising a frequency corresponding to the number of teeth $z_s$ of the tool, the result of this step being the function $\overset{\&\circ}{m}_{332}(pT_e)$. The frequency corresponding to the number of teeth $z_s$ of the tool is supposed to mean the reversed value of the number of teeth of the tool 23 in the time domain, which touch the product in one second. Further, the first to fifth steps are repeated for the simulated waveforms $m_{336}(kT)$ and $m_{338}(kT)$, wherein the function $\overset{\&\circ}{m}_{336}(pT_e)$ is the result of the fifth step. The sixth step is the step of filtering the processed data, wherein the filter parameters are determined by the processed function $\overset{\&\circ}{m}_{332}(pT_e)$ and the filtered data is the processed function $\overset{\&\circ}{m}_{336}(pT_e)$. The filtering operation is performed so that the processed functions $\overset{\&\circ}{m}_{332}(pT_e)$ and $\overset{\&\circ}{m}_{336}(pT_e)$ are deducted from

each other and the result is the processed function $m^{\&\&}_{332}(pT_e)$, which can be expressed by equation:

$$m^{\&\&}_{332}(pT_e) = m^{\&}_{332}(pT_e) - m^{\&}_{336}(pT_e)$$

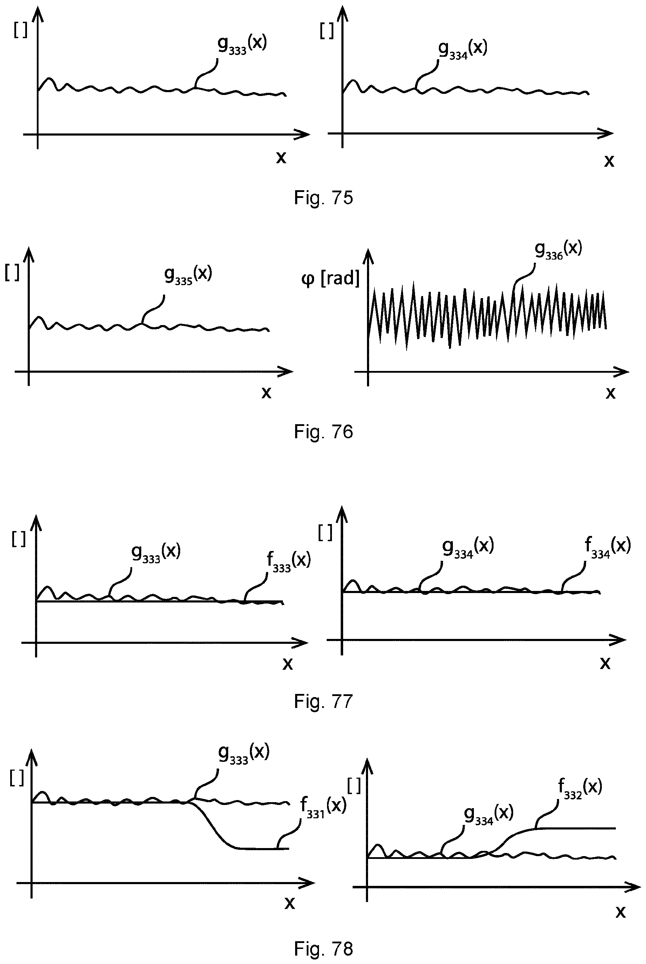

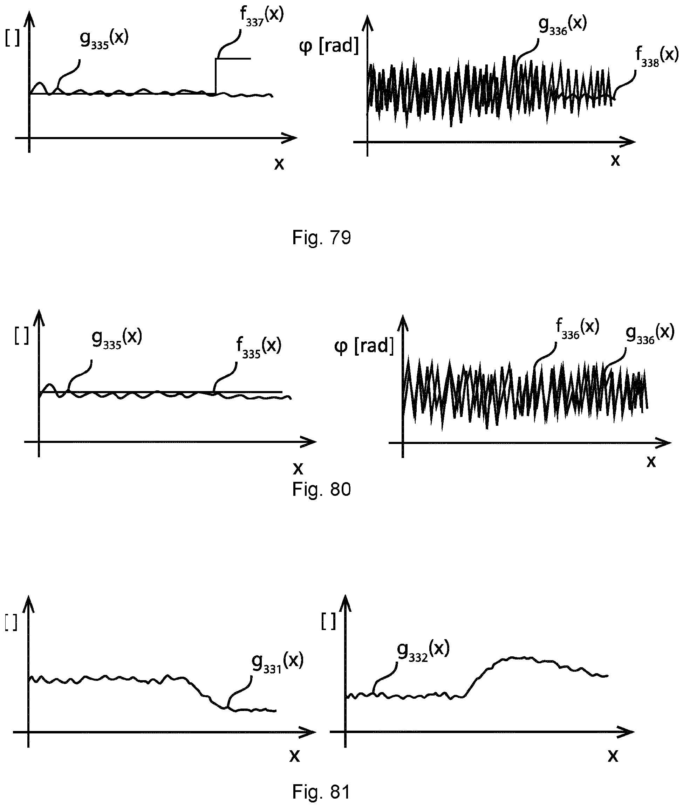

The processed function $m^{\&\&}_{332}(pT_e)$ is further statistically evaluated in the data modification step by determining the minimum and maximum function, and the angular distance between the maximum and the minimum and the difference of the maximum and minimum of the processed function $m^{\&\&}_{332}(pT_e)$ are observed, and trends are subsequently created from these values, where the angular distance between the minimum and maximum is represented by function $f_{337}(x)$ and the difference between the maximum and the minimum is represented by function $f_{338}(x)$. These trends represent a model fault state of the crack in the blank. In this exemplary embodiment, the measured data are for the determination of the damage of the tool teeth processed by the same steps as the simulated waveforms $m_{331}(kT)$ and $m_{333}(kT)$ to derive a model fault state of the tool tooth. Functions $g_{333}(x)$ and $g_{334}(x)$ in Figure 75 then correspond to the processed waveforms. In this exemplary embodiment, in order to determine the crack in the blank, the measured data are processed by the same steps as the simulated waveforms $m_{332}(kT)$, $m_{334}(kT)$, $m_{336}(kT)$ and $m_{338}(kT)$ to derive the model fault state of the crack in the blank. Functions $g_{335}(x)$ and $g_{336}(x)$ in the Figure 76 then correspond to the processed waveforms. The step of evaluating the similarity of the processed data to the model states is performed in this exemplary embodiment via the information interface, namely via the touch screen of the machine control system. As can be seen in in Figures 77 and 80, the processed data $g_{333}(x)$ and $9_{334}(x)$, $g_{335}(x)$ and $g_{336}(x)$, the model fault-free state $f_{333}(x)$ and $f_{334}(x)$, $f_{335}(x)$ and $f_{336}(x)$ correspond to each other, since the waveforms are similar. As can be seen in Figure 78, the processed data $g_{333}(x)$, $g_{334}(x)$ do not correspond to the model fault state of the tool tooth damage $f_{331}(x)$, $f_{332}(x)$, since the waveforms are not similar. As can be seen in Figure 79, the processed data $g_{335}(x)$, $g_{336}(x)$ do not correspond to the model fault state of the crack in the blank $f_{337}(x)$, $f_{338}(x)$, since the waveforms are not similar. Based on the results of the comparison, information is issued on the information interface that the rolling machine is in a fault-free state.

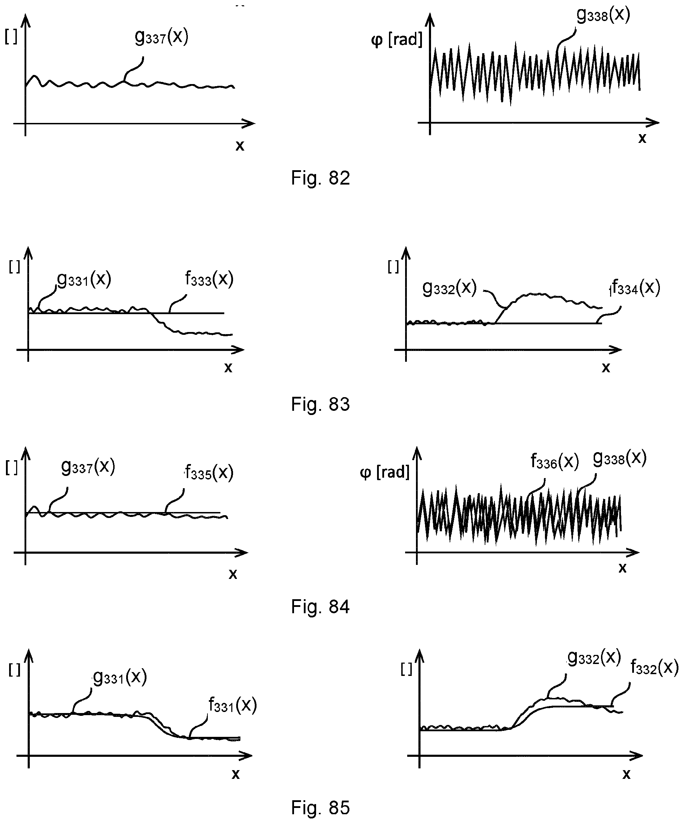

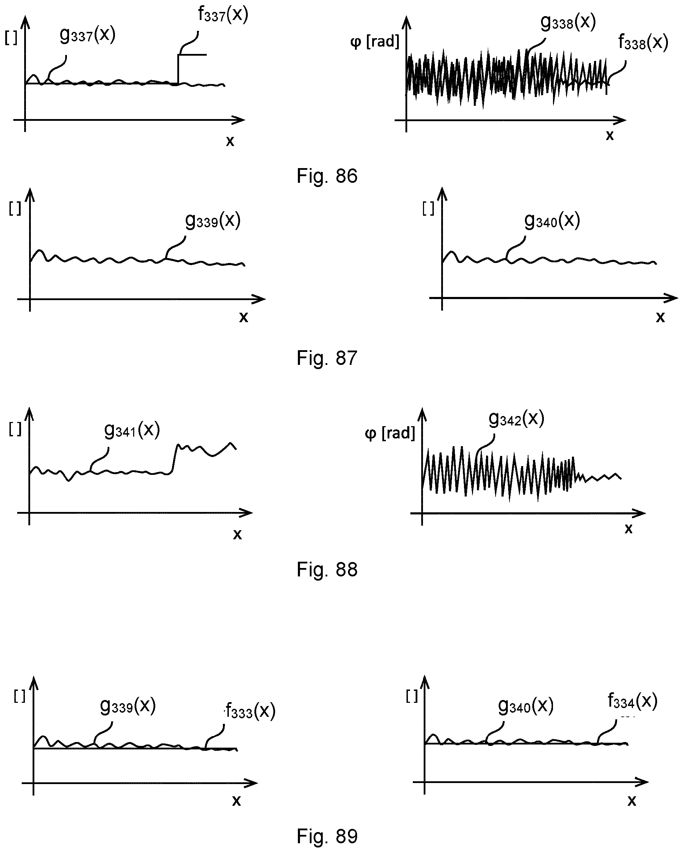

The eighth specific exemplary embodiment, with the exception of the measured data waveforms and the result of the step of evaluating similarity of the processed data to the model states, corresponds to the seventh specific exemplary embodiment. In this exemplary embodiment, to determine the tool tooth damage, the measured data are processed by the same steps as the simulated waveforms $m_{331}(kT)$ and $m_{333}(kT)$ for deriving the model fault state of the tool tooth damage in the seventh specific exemplary embodiment. Functions $g_{331}(x)$ and $g_{332}(x)$ in Figure 81 then correspond to the processed waveforms. In this exemplary embodiment, in order to determine the crack in the blank, the measured data are processed by the same steps as the simulated waveforms $m_{332}(kT)$, $m_{334}(kT)$, $m_{336}(kT)$ and $m_{338}(kT)$ for deriving the model fault state of the crack in the blank. Functions $g_{337}(x)$ and $g_{338}(x)$ in the Figure 82 then correspond to the processed waveforms. The step of evaluating the similarity of the processed data to the model states is performed in this exemplary embodiment via the information interface, namely via touch screen of the machine control system. As can be seen in Figures 83 and 84, the processed data $g_{331}(x)$ and $g_{332}(x)$, $g_{337}(x)$ and $g_{338}(x)$, the model fault-free state $f_{333}(x)$ and $f_{334}(x)$, $f_{335}(x)$ and $f_{336}(x)$ do not correspond to each other, since the waveforms are not similar. As can be seen in Figure 85, the processed data $g_{331}(x)$, $g_{332}(x)$ correspond to the model fault state of the tool tooth damage $f_{331}(x)$, $f_{332}(x)$, since the waveforms are similar. As can be seen in Figure 86, the processed data $g_{337}(x)$, $g_{338}(x)$ do not correspond to the model fault state of the crack in the blank $f_{337}(x)$, $f_{338}(x)$, since the waveforms are not similar. Based on the results of the comparison, information is issued to the information interface that the rolling machine is in tool tooth damage fault state, with the damage of the tooth 17.

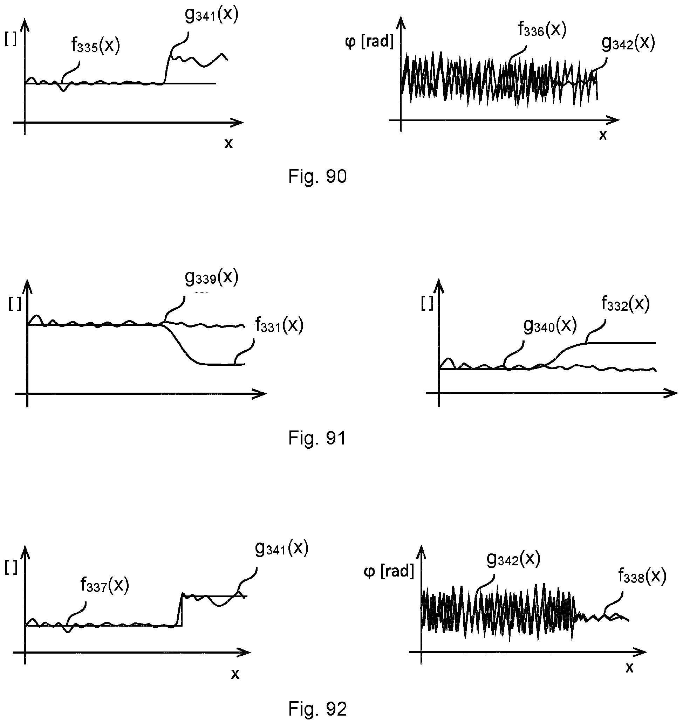

The ninth specific exemplary embodiment, with the exception of the measured data waveforms and the result of the step of evaluating similarity of the processed data to the model states, corresponds to the seventh specific exemplary embodiment. In this exemplary embodiment, to determine the tool tooth damage, the measured data are processed by the same steps as the simulated waveforms $m_{331}(kT)$ and $m_{333}(kT)$ for deriving a model fault state of the tool tooth damage in the seventh specific exemplary embodiment. Functions $g_{339}(x)$ and $g_{340}(x)$ in Figure 87 then correspond to the processed waveforms. In this exemplary embodiment, in order to determine the crack in the blank, the measured data are processed by the same steps as the simulated waveforms $m_{332}(kT)$, $m_{334}(kT)$, $m_{336}(kT)$ and $m_{338}(kT)$ for deriving the model fault state of the crack in the blank. Functions $g_{341}(x)$ and $g_{342}(x)$ in the Figure 88 then correspond to the processed waveforms. The step of evaluating the similarity of the processed data to the model states is performed in this exemplary embodiment via the information interface, namely via touch screen of the machine control system. As can be seen in Figures 89 and 90, the processed data $g_{339}(x)$ and $g_{340}(x)$, $g_{341}(x)$ and $g_{342}(x)$, the model

fault-free state $f_{333}(x)$ and $f_{334}(x)$, $f_{335}(x)$ and $f_{336}(x)$ do not correspond to each other, since the waveforms are not similar. As can be seen in Figure 91, the processed data $g_{339}(x)$, $g_{340}(x)$ do not correspond to the model fault state of the tool tooth damage $f_{331}(x)$, $f_{332}(x)$, since the waveforms are not similar. As can be seen in Figure 92, the processed data $g_{341}(x)$, $g_{342}(x)$ correspond to the model fault state of the crack in the blank $f_{337}(x)$, $f_{338}(x)$, since the waveforms are similar. Based on the results of the comparison, information is issued on the information interface that the rolling machine is in the fault state of the crack in the blank.

List of Reference Numbers

[0083]

1 - Forming machine
2 - First sensor
3 - Second sensor
4 - Monitoring unit
5 - Computing device
6 - Control part
7 - Peripheral device
8 - Information interface
9 - Original notch
10 - Enlarged notch
11 - First vibration sensor
12 - Second vibration sensor
13 - Strain with a notch waveform
14 - Strain with an enlarged notch waveform
15 - Built-in beam
16 - Blank
17 - Tooth damage
18 - First piezoelectric accelerometer
19 - Second piezoelectric accelerometer
20 - First roller bearing
21 - First tool
22 - Second roller bearing
23 - Second tool
24 - First rotary encoder
25 - Measured data with temperature compensation waveform
26 - Measured data without temperature compensation waveform
27 - First accelerometer
28 - Second accelerometer
29 - Third accelerometer
30 - Fourth accelerometer
31 - Strain sensor
32 - Contact point of the ram and the frame when moving downward
33 - Point of the smallest distance between the ram and the frame
34 - Contact point of the ram and the frame when moving upward
35 - Point of the smallest distance of the dies
36 - Ram
37 - Frame
38 - Roller bearing bedding
39 - Lower clamp
40 - Upper die
41 - Lower die
42 - Upper clamp
43 - First temperature sensor
44 - Second temperature sensor
45 - Crankshaft
46 - Ram guide on the frame
47 - Second rotary encoder

48 - Tooth
49 - Contact point of the tool and the product
50 - Force sensor
51 - Distance sensor
52 - Ram guide on the ram
53 - Fifth accelerometer
54 - Crank forging press

**Claims**

1. A method of performing technical diagnostics of forming machines by means of a diagnostic system of forming machines, the diagnostic system comprising an information interface and a control part, wherein the control part comprises a memory, wherein the diagnostic system of forming machines (1) further comprises at least a first sensor (2) and a second sensor (3) for positioning on the forming machines (1) selected from a group of vibration sensors, strain sensors and distance sensors, in the memory of the control part (6) is further stored a model fault-free state comprising waveforms corresponding to waveforms and quantities measured by the at least first sensor (2) and second sensor (3) in fault-free operation and further stored in the memory of the control part is at least a first model fault state and a second model fault state, wherein both the first model fault state and the second model fault state comprise waveforms corresponding to waveforms and quantities measured by the at least first sensor (2) and second sensor (3) during a fault state during operation, wherein waveforms are measured by the at least first sensor (2) and second sensor (3) during operation of a forming machine, the measured waveforms from the at least first sensor (2) and second sensor (3) are sent to the control part (6), subsequently the measured waveforms from the at least first sensor (2) and second sensor (3) in the control part (6) are processed by an evaluation process comprising a step of pairing the measured waveforms so that the samples from individual sensors correspond time wise, and comprising a step of filtering the paired waveforms, wherein waveforms from at least one of the at least first sensor (2) and second sensor (3) are used to set filter parameters for filtering waveforms from at least one other sensor from the at least first sensor (2) and second sensor (3), wherein the processed waveforms are subsequently compared to the model states in the control part (6), and on the basis of this comparison the control part (6) sends an information to the information interface that the forming machine (1) is in a fault-free state or in at least one of the model fault states.

2. A method of performing technical diagnostics of forming machines according to claim 1 **characterised in that** if the processed waveforms do not correspond to a model fault-free state and at the same time if they do not correspond to any model fault state, the control part on the information interface will issue an information that the forming machine is in an unknown state.

3. A method of performing technical diagnostics of forming machines according to any of the preceding claims **characterised in that** the evaluation process further comprises the step of waveform modification using a transmission function.

4. A method of performing technical diagnostics of forming machines according to any of the preceding claims **characterised in that** in the step of filtering the filter parameters are a time interval determined on the basis of a waveform measured by one of the at least first sensor (2) and second sensor (3), a filter with these parameters being subsequently applied to a waveform measured by another one of the at least first sensor (2) and second sensor (3); or the filter parameters are a time waveform measured by one of the at least first sensor (2) and second sensor (3) for determination of the amplification or attenuation of the waveform data to be filtered, a filter with these parameters being subsequently applied to a waveform measured by another one of the at least first sensor (2) and second sensor (3); or the filter parameters are a waveform measured by one sensor of the at least first sensor (2) and second sensor (3), a filter with these parameters subsequently subtracting the waveform measured by the one sensor from a waveform measured by another one of the at least first sensor (2) and second sensor (3); or the filter parameters are a waveform measured by one of the at least first sensor (2) and second sensor (3) and a kinematic model of the forming machine during operation, a filter with these parameters being subsequently applied to a waveform measured by another one of the at least first sensor (2) and second sensor (3).

5. A diagnostic system of forming machines for performing the method according to any of the preceding claims, the diagnostic system including an information interface and a control part, wherein the control part comprises a memory, wherein the diagnostics system for forming machines comprises at least a first sensor (2) and a second sensor (3) for placing on forming machines (1) selected from the group of vibration sensors, strain sensors and distance sensors, further stored in the memory of the control part (6) is a model fault-free state comprising waveforms corresponding to waveforms and quantities measured by the at least first sensor (2) and second sensor (3) in fault-free operation and further stored in the memory of the control part (6) are at least the first model fault state and the second model fault state, wherein both the first model fault state and the second model fault state comprise waveforms corresponding to waveforms and quantities measured by the at least first sensor (2) and second sensor (3) during a fault state during operation, and wherein the control part (6) is configured to perform the steps of the method according to any of the preceding claims.

6. A diagnostic system of forming machines according to claim 5 **characterised in that** the model fault-free state is a model fault-free state of at least one member from the group of a forming machine part, tool, or formed product.

7. A diagnostic system of forming machines according to claim 5 or 6 **characterised in that** the model fault state is any model fault state selected from the group of a model fault state of a forming machine part, a model fault state of a tool or a model fault state of the formed product.

8. A diagnostic system of forming machines according to any of claims 5 to 7 **characterised in that** the control part includes a monitoring unit and a remote server, the sensors being data connected to the monitoring unit and the monitoring unit being data connected to the remote server.

9. A diagnostic system of forming machines according to any of claims 5 to 8 **characterised in that** least one of the sensors is a temperature sensor, wherein the temperature sensor is located in close proximity to at least one sensor of another type.

**Patentansprüche**

1. Ein Verfahren zur Durchführung einer technischen Diagnostik von Umformmaschinen mittels eines Diagnosesystems für Umformmaschinen, wobei das Diagnosesystem eine Informationsschnittstelle und ein Steuerteil umfasst, wobei der Steuerteil einen Speicher umfasst, wobei das Diagnosesystem für Umformmaschinen (1) ferner zumindest einen ersten Sensor (2) und einen zweiten Sensor (3) zur Positionierung an Umformmaschinen (1) umfasst, ausgewählt aus einer Gruppe von Schwingungssensoren, Dehnungssensoren und Abstandssensoren, wobei im Speicher des Steuerteils (6) ferner einen modellfehlerfreien Zustand gespeichert ist, der Wellenformen umfasst, die von dem zumindest ersten Sensor (2) und zweiten Sensor (3) im fehlerfreien Betrieb gemessenen Wellenformen und Größen entsprechen, und ferner im Speicher des Steuerteils zumindest ein erster Modellfehlerzustand und ein zweiter Modellfehlerzustand gespeichert sind, wobei sowohl der erste Modellfehlerzustand als auch der zweite Modellfehlerzustand Wellenformen umfassen, die von dem zumindest ersten Sensor (2) und zweiten Sensor (3) während eines Fehlerzustands während des Betriebs gemessenen Wellenformen und Größen entsprechen, wobei Wellenformen durch den mindestens ersten Sensor (2) und den zweiten Sensor (3) während des Betriebs einer Umformmaschine gemessen werden, die gemessenen Wellenformen von dem mindestens ersten Sensor (2) und dem zweiten Sensor (3) an den Steuerteil (6) gesendet werden, anschließend die gemessenen Wellenformen von dem mindestens ersten Sensor (2) und dem zweiten Sensor (3) in dem Steuerteil (6) durch ein Bewertungsverfahren verarbeitet werden, das einen Schritt des Zusammenlegens der gemessenen Wellenformen umfasst, so dass die Abtastwerte von einzelnen Sensoren zeitweise entsprechen, und das einen Schritt des Filters der zusammengelegten Wellenformen, wobei Wellenformen von mindestens einem von dem mindestens ersten Sensor (2) und dem zweiten Sensor (3) verwendet werden, um Filterparameter zum Filtern von Wellenformen von mindestens einem anderen Sensor von dem mindestens ersten Sensor (2) und dem zweiten Sensor (3) einzustellen, wobei die verarbeiteten Wellenformen anschließend mit den Modellzuständen im Steuerteil (6) verglichen werden, und auf Basis dieses Vergleichs der Steuerteil (6) eine Information an die Informationsschnittstelle sendet, dass sich die Umformmaschine (1) in einem fehlerfreien Zustand oder in mindestens einem der Modellfehlerzustände befindet.

2. Ein Verfahren zur Durchführung einer technischen Diagnostik von Umformmaschinen nach Anspruch 1, **dadurch gekennzeichnet, dass,** wenn die verarbeiteten Wellenformen nicht einem modellfehlerfreien Zustand entsprechen und gleichzeitig, wenn sie keinem Modellfehlerzustand entsprechen, der Steuerteil an der Informationsschnittstelle eine Information ausgeben wird, dass sich die Umformmaschine in einem unbekannten Zustand befindet.

3. Ein Verfahren zur Durchführung einer technischen Diagnostik von Umformmaschinen nach einem der vorhergehenden Ansprüche, **dadurch gekennzeichnet, dass** das Bewertungsverfahren ferner den Schritt der Wellenformmodifikation unter Verwendung einer Übertragungsfunktion umfasst.

**4.** Ein Verfahren zur Durchführung einer technischen Diagnostik von Umformmaschinen nach einem der vorhergehenden Ansprüche, **dadurch gekennzeichnet, dass** im Schritt des Filterns, die Filterparameter ein Zeitintervall sind, das auf der Basis einer von einem des mindestens ersten Sensors (2) und des zweiten Sensors (3) gemessenen Wellenform bestimmt wird, wobei anschließend ein Filter mit diesen Parametern auf eine von einem anderen des mindestens ersten Sensors (2) und des zweiten Sensors (3) gemessene Wellenform angewendet wird; oder die Filterparameter eine von einem von dem mindestens ersten Sensor (2) und dem zweiten Sensor (3) gemessene Zeitwellenform zur Bestimmung der Verstärkung oder Dämpfung der zu filternden Wellenformdaten sind, wobei anschließend ein Filter mit diesen Parametern auf eine von einem anderen des mindestens ersten Sensors (2) und des zweiten Sensors (3) gemessene Wellenform angewendet wird; oder die Filterparameter eine von einem Sensor des mindestens ersten Sensors (2) und des zweiten Sensors (3) gemessene Wellenform sind, wobei anschließend ein Filter mit diesen Parametern die von dem Sensor gemessene Wellenform von einer von einem anderen von dem mindestens ersten Sensor (2) und dem zweiten Sensor (3) gemessenen Wellenform subtrahiert; oder die Filterparameter eine von einem des zumindest ersten Sensors (2) und zweiten Sensors (3) und einem kinematischen Modell der Umformmaschine im Betrieb gemessene Wellenform sind, wobei anschließend ein Filter mit diesen Parametern auf eine von einem anderen des zumindest ersten Sensors (2) und zweiten Sensors (3) gemessene Wellenform angewendet wird.

**5.** Ein Diagnosesystem für Umformmaschinen zur Durchführung des Verfahrens nach einem der vorhergehenden Ansprüche, wobei das Diagnosesystem eine Informationsschnittstelle und einen Steuerteil umfasst, wobei der Steuerteil einen Speicher umfasst, wobei das Diagnosesystem für Umformmaschinen (1) zumindest einen ersten Sensor (2) und einen zweiten Sensor (3) zur Positionierung an Umformmaschinen (1) umfasst, ausgewählt aus einer Gruppe von Schwingungssensoren, Dehnungssensoren und Abstandssensoren, wobei im Speicher des Steuerteils (6) ferner einen modellfehlerfreien Zustand gespeichert ist, der Wellenformen umfasst, die von dem zumindest ersten Sensor (2) und zweiten Sensor (3) im fehlerfreien Betrieb gemessenen Wellenformen und Größen entsprechen, und ferner im Speicher des Steuerteils zumindest ein erster Modellfehlerzustand und ein zweiter Modellfehlerzustand gespeichert sind, wobei sowohl der erste Modellfehlerzustand als auch der zweite Modellfehlerzustand Wellenformen umfassen, die von dem zumindest ersten Sensor (2) und zweiten Sensor (3) während eines Fehlerzustands während des Betriebs gemessenen Wellenformen und Größen entsprechen, und wobei der Steuerteil (6) konfiguriert ist, um die Schritte des Verfahrens nach einem der vorhergehenden Ansprüche durchzuführen.

**6.** Ein Diagnosesystem für Umformmaschinen nach Anspruch 5, **dadurch gekennzeichnet, dass** der modellfehlerfreie Zustand ein modellfehlerfreier Zustand mindestens eines Elements aus der Gruppe eines Umformmaschinenteils, Werkzeugs oder eines geformten Produkts ist.

**7.** Ein Diagnosesystem für Umformmaschinen nach Anspruch 5 oder 6, **dadurch gekennzeichnet, dass** der Modellfehlerzustand ein beliebiger Modellfehlerzustand ist, der aus der Gruppe eines Modellfehlerzustands eines Umformmaschinenteils, eines Modellfehlerzustands eines Werkzeugs oder eines Modellfehlerzustands eines gebildeten Produkts ausgewählt ist.

**8.** Ein Diagnosesystem für Umformmaschinen nach einem der Ansprüche 5 bis 7, **dadurch gekennzeichnet, dass** der Steuerteil eine Überwachungseinheit und einen entfernten Server umfasst, wobei die Sensoren mit der Überwachungseinheit durch eine Datenverbindung verbunden sind und die Überwachungseinheit mit dem entfernten Server durch eine Datenverbindung verbunden ist.

**9.** Ein Diagnosesystem für Umformmaschinen nach einem der Ansprüche 5 bis 8, **dadurch gekennzeichnet, dass** mindestens einer der Sensoren ein Temperatursensor ist, wobei der Temperatursensor in unmittelbarer Nähe zu mindestens einem Sensor eines anderen Typs angeordnet ist.

**Revendications**

**1.** Un procédé de réalisation de diagnostic technique de machines de formation au moyen d'un système de diagnostic de machines de formation, où le système de diagnostic comprend une interface d'informations et une partie de commande, où la partie de commande comprend une mémoire, où le système de diagnostic de machines de formation (1) comprend en outre au moins un premier capteur (2) et un second capteur (3) pour un positionnement sur des machines de formation (1), sélectionné à partir d'un groupe de capteurs de vibration, de capteurs de contrainte et de capteurs de distance, où dans la mémoire de la partie de commande (6) est en outre stocké un état sans défaut de modèle comprenant des formes d'onde correspondant à des formes d'onde et des quantités mesurées par au moins le premier capteur (2) et le second capteur (3) en fonctionnement sans défaut, et dans la mémoire de la partie de commande sont en outre stockés au moins un premier état de défaut de modèle et a un second état de défaut de modèle, où le premier état de défaut de modèle et le second état de défaut de modèle comprennent des formes d'onde correspondant à des formes d'onde et à des quantités mesurées par au moins le premier capteur (2) et le second capteur (3) pendant un état de défaut pendant le fonctionnement, où les formes d'onde sont mesurées par au moins le premier capteur (2) et le second capteur (3) pendant le fonctionnement d'une machine de formation, les formes d'onde mesurées provenant d'au moins le premier capteur (2) et le second capteur (3) sont envoyées à la partie de commande (6), les formes d'onde mesurées provenant d'au moins le premier capteur (2) et le second capteur (3) dans la partie de commande (6) sont traitées par un procédé d'évaluation comprenant une étape d'appariement des formes d'onde mesurées de telle sorte que les échantillons provenant de capteurs individuels correspondent dans le temps, et comprenant une étape de filtrage des formes d'onde appariées, où des formes d'onde provenant d'au moins l'un du premier capteur (2) et du second capteur (3) sont utilisées pour définir des paramètres de filtre pour filtrer des formes d'onde à partir d'au moins un autre capteur provenant d'au moins le premier capteur (2) et le second capteur (3), où les formes d'onde traitées sont ensuite comparées aux états de modèle dans la partie de commande (6), et sur la base de cette comparaison, la partie de commande (6) envoie des informations à l'interface d'informations que la machine de formation (1) est dans un état sans défaut ou dans au moins l'un des états de défaut de modèle.

2. Un procédé de réalisation de diagnostic technique de machines de formation selon la revendication 1, **caractérisé en ce que** si les formes d'onde traitées ne correspondent pas à un état sans défaut de modèle et en même temps si elles ne correspondent pas à un état de défaut de modèle quelconque, la partie de commande émet une information sur l'interface d'informations que la machine de formation est dans un état inconnu.

3. Un procédé de réalisation de diagnostic technique de machines de formation selon l'une quelconque des revendications précédentes, **caractérisé en ce que** le procédé d'évaluation comprend en outre l'étape de modification de forme d'onde à l'aide d'une fonction de transmission.

4. Un procédé de réalisation de diagnostic technique de machines de formation selon l'une quelconque des revendications précédentes, **caractérisé en ce que** dans l'étape de filtrage, des paramètres de filtre sont un intervalle de temps déterminé sur la base d'une forme d'onde mesurée par l'un d'au moins le premier capteur (2) et le second capteur (3), où un filtre avec ces paramètres est ensuite appliqué à une forme d'onde mesurée par un autre parmi au moins le premier capteur (2) et le second capteur (3); ou les paramètres de filtre sont une forme d'onde temporelle mesurée par l'un d'au moins le premier capteur (2) et le second capteur (3) pour la détermination de l'amplification ou de l'atténuation des données de forme d'onde à filtrer, où un filtre avec ces paramètres est ensuite appliqué à une forme d'onde mesurée par un autre parmi au moins le premier capteur (2) et le second capteur (3); ou les paramètres de filtre sont une forme d'onde mesurée par un capteur d'au moins le premier capteur (2) et le second capteur (3), où un filtre avec ces paramètres soustraie ensuite la forme d'onde mesurée par le capteur d'une forme d'onde mesurée par un autre capteur parmi au moins le premier capteur (2) et le second capteur (3); ou les paramètres de filtre sont une forme d'onde mesurée par l'un d'au moins le premier capteur (2) et le second capteur (3) et un modèle cinématique de la machine de formation pendant le fonctionnement, où un filtre avec ces paramètres est ensuite appliqué à une forme d'onde mesurée par un autre parmi au moins le premier capteur (2) et le second capteur (3).

5. Un système de diagnostic de machines de formation pour réaliser le procédé selon l'une quelconque des revendications précédentes, où le système de diagnostic comprend une interface d'informations et une partie de commande, où la partie de commande comprend une mémoire, où le système de diagnostic de machines de formation (1) comprend au moins un premier capteur (2) et un second capteur (3) pour un positionnement sur des machines de formation (1), sélectionné à partir d'un groupe de capteurs de vibration, de capteurs de contrainte et de capteurs de distance, où dans la mémoire de la partie de commande (6) est en outre stocké un état sans défaut de modèle comprenant des formes d'onde correspondant à des formes d'onde et des quantités mesurées par au moins le premier capteur (2) et le second capteur (3) en fonctionnement sans défaut, et dans la mémoire de la partie de commande sont en outre stockés au moins un premier état de défaut de modèle et a un second état de défaut de modèle, où le premier état de défaut de modèle et le second état de défaut de modèle comprennent des formes d'onde correspondant à des formes d'onde et à des quantités mesurées par au moins le premier capteur (2) et le second capteur (3) pendant un état de défaut pendant le fonctionnement, et où la partie de commande (6) est configurée pour effectuer les étapes du procédé selon l'une quelconque des revendications précédentes.

6. Un système de diagnostic de machines de formation selon la revendication 5, **caractérisé en ce que** l'état sans défaut de modèle est un état sans défaut de modèle d'au moins un élément du groupe d'une partie de machine de formation, d'un outil ou d'un produit formé.

7. Un système de diagnostic de machines de formation selon la revendication 5 ou 6, **caractérisé en ce que** l'état de défaut de modèle est un état de défaut de modèle quelconque choisi dans le groupe d'un état de défaut de modèle d'une partie de machine de formation, d'un état de défaut de modèle d'un outil ou d'un état de défaut de modèle d'un produit formé.

8. Un système de diagnostic de machines de formation selon l'une quelconque des revendications 5 à 7, **caractérisé en ce que** la partie de commande comprend une unité de surveillance et un serveur distant, où les capteurs sont connectés par une connexion de données à l'unité de surveillance et l'unité de surveillance est connectée par une connexion de données au serveur distant.

9. Un système de diagnostic de machines de formation selon l'une quelconque des revendications 5 à 8, **caractérisé en ce que** au moins un des capteurs est un capteur de température, où le capteur de température est situé à proximité immédiate d'au moins un capteur d'un autre type.

Fig. 1

Fig. 2

TIME POINT OF FORMING ₁

Fig. 3

TIME POINT OF FORMING 5

Fig. 4

TIME POINT OF FORMING 7

Fig. 5

TIME POINT OF FORMING 10

Fig. 6

TIME POINT OF FORMING 15

Fig. 7

TIME POINT OF FORMING 20

Fig. 8

TIME POINT OF FORMING 25

Fig. 9

TIME POINT OF FORMING 30

Fig. 10

TIME POINT OF FORMING 35

Fig. 11

TIME POINT OF FORMING 40

Fig. 12

TIME POINT OF FORMING 43

Fig. 13

TIME POINT OF FORMING 45

Fig. 14

TIME POINT OF FORMING 50

Fig. 15

TIME POINT OF THE FORMING PROCESS

Fig. 16

TIME POINT OF THE FORMING PROCESS

Fig. 17

TIME POINT OF THE FORMING PROCESS

Fig. 18

TIME POINT OF THE FORMING PROCESS

Fig. 19

Fig. 20

Fig. 21

Fig. 22

Fig. 23

Fig. 24

The difference between the minimum and maximum of the strain gauge signal amplitudes processed with a low pass with a limit frequency of 100 Hz between the forming times 20 to 35

$\varepsilon[\mu m/m]$

$f_{101}(x)$

X

The difference between the minimum and maximum of the accelerometer signal amplitudes processed with a low pass with a limit frequency of 100 Hz between the forming times 20 to 35

$a[m \cdot s^{-ll}]$

$f_{102}(x)$

X

Effective value of an accelerometer signal processed with a high pass with a limit frequency of 20 kHz between the forming times of 20 to 35

$a[m \cdot s^{-ll}]$

$f_{103}(x)$

X

The difference between the minimum and maximum of the strain gauge signal amplitudes processed with a low pass with a limit frequency of 100 Hz between the forming times 0 to 50

$\varepsilon[\mu m/m]$

$f_{104}(x)$

X

The difference between the minimum and maximum of the accelerometer signal amplitudes processed with a low pass with a limit frequency of 100 Hz between the forming times 0 to 50

$a[m \cdot s^{-ll}]$

$f_{105}(x)$

X

Effective value of an accelerometer signal processed with a high pass with a limit frequency of 20 kHz between the forming times of 0 to 50

$a[m \cdot s^{-ll}]$

$f_{106}(x)$

X

Fig. 25

The difference between the minimum and maximum of the strain gauge signal amplitudes processed with a low pass with a limit frequency of 100 Hz between the forming times 20 to 35

The difference between the minimum and maximum of the accelerometer signal amplitudes processed with a low pass with a limit frequency of 100 Hz between the forming times 20 to 35

Effective value of an accelerometer signal processed with a high pass with a limit frequency of 20 kHz between the forming times of 20 to 35

$\varepsilon[\mu m/m]$    $f_{111}(x)$

$a[m \cdot s^{-1}]$    $f_{112}(x)$

$a[m \cdot s^{-1}]$    $f_{113}(x)$

The difference between the minimum and maximum of the strain gauge signal amplitudes processed with a low pass with a limit frequency of 100 Hz between the forming times 0 to 50

The difference between the minimum and maximum of the accelerometer signal amplitudes processed with a low pass with a limit frequency of 100 Hz between the forming times 0 to 50

Effective value of an accelerometer signal processed with a high pass with a limit frequency of 20 kHz between the forming times of 0 to 50

$\varepsilon[\mu m/m]$    $f_{114}(x)$

$a[m \cdot s^{-1}]$    $f_{115}(x)$

$a[m \cdot s^{-1}]$    $f_{116}(x)$

Fig. 26

The difference between the minimum and maximum of the strain gauge signal amplitudes processed with a low pass with a limit frequency of 100 Hz between the forming times 20 to 35

The difference between the minimum and maximum of the accelerometer signal amplitudes processed with a low pass with a limit frequency of 100 Hz between the forming times 20 to 35

Effective value of an accelerometer signal processed with a high pass with a limit frequency of 20 kHz between the forming times of 20 to 35

The difference between the minimum and maximum of the strain gauge signal amplitudes processed with a low pass with a limit frequency of 100 Hz between the forming times 0 to 50

The difference between the minimum and maximum of the accelerometer signal amplitudes processed with a low pass with a limit frequency of 100 Hz between the forming times 0 to 50

Effective value of an accelerometer signal processed with a high pass with a limit frequency of 20 kHz between the forming times of 0 to 50

Fig. 27

The difference between the minimum and maximum of the strain gauge signal amplitudes processed with a low pass with a limit frequency of 100 Hz between the forming times 20 to 35

The difference between the minimum and maximum of the accelerometer signal amplitudes processed with a low pass with a limit frequency of 100 Hz between the forming times 20 to 35

Effective value of an accelerometer signal processed with a high pass with a limit frequency of 20 kHz between the forming times of 20 to 35

$\varepsilon[\mu m/m]$   $f_{131}(x)$   x

$a[m \cdot s^{-1}]$   $f_{132}(x)$   x

$a[m \cdot s^{-1}]$   $f_{133}(x)$   x

The difference between the minimum and maximum of the strain gauge signal amplitudes processed with a low pass with a limit frequency of 100 Hz between the forming times 0 to 50

The difference between the minimum and maximum of the accelerometer signal amplitudes processed with a low pass with a limit frequency of 100 Hz between the forming times 0 to 50

Effective value of an accelerometer signal processed with a high pass with a limit frequency of 20 kHz between the forming times of 0 to 50

$\varepsilon[\mu m/m]$   $f_{134}(x)$

$a[m \cdot s^{-1}]$   $f_{135}(x)$

$a[m \cdot s^{-1}]$   $f_{136}(x)$

Fig. 28

The difference between the minimum and maximum of the strain gauge signal amplitudes processed with a low pass with a limit frequency of 100 Hz between the forming times 20 to 35

The difference between the minimum and maximum of the accelerometer

signal amplitudes processed with a low pass with a limit frequency of 100 Hz

between the forming times 20 to 35

Effective value of an accelerometer signal processed with a high pass with a limit frequency of 20 kHz between the forming times of 20 to 35

The difference between the minimum and maximum of the strain gauge signal amplitudes processed with a low pass with a limit frequency of 100 Hz between the forming times 0 to 50

The difference between the minimum and maximum of the accelerometer

signal amplitudes processed with a low pass with a limit frequency of 100 Hz

between the forming times 0 to 50

Effective value of an accelerometer signal processed with a high pass with a limit frequency of 20 kHz between the forming times of 0 to 50

Fig. 29

$f_{107}(x)$

$g_{117}(x)$

$a[m \cdot s^{-1}]$

0

1  5  7  10  15  20  25  30  35  40  43  45  50

TIME POINT OF THE FORMING PROCESS

Fig. 30

$\varepsilon[\mu m/m]$

$g_{118}(x)$

$f_{108}(x)$

0

1  5  7  10  15  20  25  30  35  40  43  45  50

TIME POINT OF THE FORMING PROCESS

Fig. 31

The difference between the minimum and maximum of the strain gauge signal amplitudes processed with a low pass with a limit frequency of 100 Hz between the forming times 20 to 35

The difference between the minimum and maximum of the accelerometer signal amplitudes processed with a low pass with a limit frequency of 100 Hz between the forming times 20 to 35

Effective value of an accelerometer signal processed with a high pass with a limit frequency of 20 kHz between the forming times of 20 to 35

$g_{121}(x)$     $\varepsilon[\mu m/m]$   x

$g_{122}(x)$     $a[m \cdot s^{-1}]$   x

$g_{123}(x)$     $a[m \cdot s^{-1}]$   x

The difference between the minimum and maximum of the strain gauge signal amplitudes processed with a low pass with a limit frequency of 100 Hz between the forming times 0 to 50

The difference between the minimum and maximum of the accelerometer signal amplitudes processed with a low pass with a limit frequency of 100 Hz between the forming times 0 to 50

Effective value of an accelerometer signal processed with a high pass with a limit frequency of 20 kHz between the forming times of 0 to 50

$g_{121}(x)$     $\varepsilon[\mu m/m]$   x

$g_{122}(x)$     $a[m \cdot s^{-1}]$   x

$g_{123}(x)$     $a[m \cdot s^{-1}]$   x

Fig. 32

Fig. 33

Fig. 34

The difference between the minimum and maximum of the strain gauge signal amplitudes processed with a low pass with a limit frequency of 100 Hz between the forming times 20 to 35

The difference between the minimum and maximum of the accelerometer signal amplitudes processed with a low pass with a limit frequency of 100 Hz between the forming times 20 to 35

Effective value of an accelerometer signal processed with a high pass with a limit frequency of 20 kHz between the forming times of 20 to 35

$g_{121}(x)$

$\epsilon[\mu m/m]$

$f_{101}(x)$

x

$g_{122}(x)$

$a[m \cdot s^{-1}]$

$f_{102}(x)$

x

$g_{123}(x)$  $f_{103}(x)$

$a[m \cdot s^{-1}]$

x

The difference between the minimum and maximum of the strain gauge signal amplitudes processed with a low pass with a limit frequency of 100 Hz between the forming times 0 to 50

The difference between the minimum and maximum of the accelerometer signal amplitudes processed with a low pass with a limit frequency of 100 Hz between the forming times 0 to 50

Effective value of an accelerometer signal processed with a high pass with a limit frequency of 20 kHz between the forming times of 0 to 50

$g_{124}(x)$

$\epsilon[\mu m/m]$

$f_{104}(x)$

x

$g_{125}(x)$

$a[m \cdot s^{-1}]$

$f_{105}(x)$

x

$g_{126}(x)$  $f_{106}(x)$

$a[m \cdot s^{-1}]$

x

Fig. 35

The difference between the minimum and maximum of the strain gauge signal amplitudes processed with a low pass with a limit frequency of 100 Hz between the forming times 20 to 35

The difference between the minimum and maximum of the accelerometer signal amplitudes processed with a low pass with a limit frequency of 100 Hz between the forming times 20 to 35

Effective value of an accelerometer signal processed with a high pass with a limit frequency of 20 kHz between the forming times of 20 to 35

The difference between the minimum and maximum of the strain gauge signal amplitudes processed with a low pass with a limit frequency of 100 Hz between the forming times 0 to 50

The difference between the minimum and maximum of the accelerometer signal amplitudes processed with a low pass with a limit frequency of 100 Hz between the forming times 0 to 50

Effective value of an accelerometer signal processed with a high pass with a limit frequency of 20 kHz between the forming times of 0 to 50

Fig. 36

The difference between the minimum and maximum of the strain gauge signal amplitudes processed with a low pass with a limit frequency of 100 Hz between the forming times 20 to 35

The difference between the minimum and maximum of the accelerometer signal amplitudes processed with a low pass with a limit frequency of 100 Hz between the forming times 20 to 35

Effective value of an accelerometer signal processed with a high pass with a limit frequency of 20 kHz between the forming times of 20 to 35

The difference between the minimum and maximum of the strain gauge signal amplitudes processed with a low pass with a limit frequency of 100 Hz between the forming times 0 to 50

The difference between the minimum and maximum of the accelerometer

signal amplitudes processed with a low pass with a limit frequency of 100 Hz

between the forming times 0 to 50

Effective value of an accelerometer signal processed with a high pass with a limit frequency of 20 kHz between the forming times of 0 to 50

Fig. 37

Fig. 38

Fig. 39

The difference between the minimum and maximum of the strain gauge signal amplitudes processed with a low pass with a limit frequency of 100 Hz between the forming times 20 to 35

The difference between the minimum and maximum of the accelerometer signal amplitudes processed with a low pass with a limit frequency of 100 Hz between the forming times 20 to 35

Effective value of an accelerometer signal processed with a high pass with a limit frequency of 20 kHz between the forming times of 20 to 35

The difference between the minimum and maximum of the strain gauge signal amplitudes processed with a low pass with a limit frequency of 100 Hz between the forming times 0 to 50

The difference between the minimum and maximum of the accelerometer signal amplitudes processed with a low pass with a limit frequency of 100 Hz between the forming times 0 to 50

Effective value of an accelerometer signal processed with a high pass with a limit frequency of 20 kHz between the forming times of 0 to 50

Fig. 40

The difference between the minimum and maximum of the strain gauge signal amplitudes processed with a low pass with a limit frequency of 100 Hz between the forming times 20 to 35

The difference between the minimum and maximum of the accelerometer signal amplitudes processed with a low pass with a limit frequency of 100 Hz between the forming times 20 to 35

Effective value of an accelerometer signal processed with a high pass with a limit frequency of 20 kHz between the forming times of 20 to 35

$g_{111}(x)$   $f_{101}(x)$

$f_{102}(x)$   $g_{112}(x)$

$g_{113}(x)$   $f_{103}(x)$

The difference between the minimum and maximum of the strain gauge signal amplitudes processed with a low pass with a limit frequency of 100 Hz between the forming times 0 to 50

The difference between the minimum and maximum of the accelerometer signal amplitudes processed with a low pass with a limit frequency of 100 Hz between the forming times 0 to 50

Effective value of an accelerometer signal processed with a high pass with a limit frequency of 20 kHz between the forming times of 0 to 50

$g_{114}(x)$   $f_{104}(x)$

$g_{115}(x)$   $f_{105}(x)$

$g_{116}(x)$   $f_{106}(x)$

Fig. 41

$f_{101}(x)$

$f_{124}(x)$

$f_{125}(x)$

Fig. 42

Fig. 43

Fig. 44

Fig. 45

Fig. 46

Fig. 47

Fig. 48

The difference between the minimum and maximum of the accelerometer signal amplitudes processed with a low pass with a limit frequency of 100 Hz between the forming times 10 - 35

$f_{201}(x)$

Effective value of an accelerometer signal processed with a high pass with a limit frequency of 20 kHz between the forming times of 10 - 35

$f_{202}(x)$

The difference between the minimum and maximum of the accelerometer signal amplitudes processed with a low pass with a limit frequency of 100 Hz between the forming times 7 - 43

$f_{203}(x)$

Effective value of an accelerometer signal processed with a high pass with a limit frequency of 20 kHz between the forming times of 7 - 43

$f_{204}(x)$

The difference between the minimum and maximum of the accelerometer signal amplitudes processed with a low pass with a limit frequency of 100 Hz between the forming times 1 - 7

$f_{205}(x)$

Effective value of an accelerometer signal processed with a high pass with a limit frequency of 20 kHz between the forming times of 1 - 7

$f_{206}(x)$

Fig. 49

The difference between the minimum and maximum of the accelerometer signal amplitudes processed with a low pass with a limit frequency of 100 Hz between the forming times 10 - 35

$f_{221}(x)$

$a[m \cdot s^{-\parallel}]$

x

Effective value of an accelerometer signal processed with a high pass with a limit frequency of 20 kHz between the forming times of 10 - 35

$f_{222}(x)$

$a[m \cdot s^{-\parallel}]$

x

The difference between the minimum and maximum of the accelerometer signal amplitudes processed with a low pass with a limit frequency of 100 Hz between the forming times 7 - 43

$f_{223}(x)$

$a[m \cdot s^{-\parallel}]$

x

Effective value of an accelerometer signal processed with a high pass with a limit frequency of 20 kHz between the forming times of 7 - 43

$f_{224}(x)$

$a[m \cdot s^{-\parallel}]$

x

The difference between the minimum and maximum of the accelerometer signal amplitudes processed with a low pass with a limit frequency of 100 Hz between the forming times 1 - 7

$f_{225}(x)$

$a[m \cdot s^{-\parallel}]$

x

Effective value of an accelerometer signal processed with a high pass with a limit frequency of 20 kHz between the forming times of 1 - 7

$f_{226}(x)$

$a[m \cdot s^{-\parallel}]$

x

Fig. 50

The difference between the minimum and maximum of the accelerometer signal amplitudes processed with a low pass with a limit frequency of 100 Hz between the forming times 10 - 35

$f_{231}(x)$

Effective value of an accelerometer signal processed with a high pass with a limit frequency of 20 kHz between the forming times of 10 - 35

$f_{232}(x)$

The difference between the minimum and maximum of the accelerometer signal amplitudes processed with a low pass with a limit frequency of 100 Hz between the forming times 7 - 43

$f_{233}(x)$

Effective value of an accelerometer signal processed with a high pass with a limit frequency of 20 kHz between the forming times of 7 - 43

$f_{234}(x)$

The difference between the minimum and maximum of the accelerometer signal amplitudes processed with a low pass with a limit frequency of 100 Hz between the forming times 1 - 7

$f_{235}(x)$

Effective value of an accelerometer signal processed with a high pass with a limit frequency of 20 kHz between the forming times of 1 - 7

$f_{236}(x)$

Fig. 51

Model fault state of
the inner ring

Fig. 52

Model fault state of the outer ring

Fig. 53

$m_{201}$[kT]

Fig. 54

$m_{203}$[kT]

Fig. 55

Fig. 56

Fig. 57

Fig. 58

$$m^{\&}_{203}[k_fF]$$

Fig. 59

Model fault state of the
bearing inner ring

Processed data

Fig. 60

The difference between the minimum and maximum of the accelerometer signal amplitudes processed with a low pass with a limit frequency of 100 Hz between the forming times 10 - 35

Effective value of an accelerometer signal processed with a high pass with a limit frequency of 20 kHz between the forming times of 10 – 35

The difference between the minimum and maximum of the accelerometer signal amplitudes processed with a low pass with a limit frequency of 100 Hz between the forming times 7 - 43

Effective value of an accelerometer signal processed with a high pass with a limit frequency of 20 kHz between the forming times of 7 - 43

The difference between the minimum and maximum of the accelerometer signal amplitudes processed with a low pass with a limit frequency of 100 Hz between the forming times 1 - 7

Effective value of an accelerometer signal processed with a high pass with a limit frequency of 20 kHz between the forming times of 1 – 7

Fig. 61

The difference between the minimum and maximum of the accelerometer signal amplitudes processed with a low pass with a limit frequency of 100 Hz between the forming times 10 - 35

$g_{201}(x)$

a[m·s$^{-II}$]

x

Effective value of an accelerometer signal processed with a high pass with a limit frequency of 20 kHz between the forming times of 10 – 35

$g_{202}(x)$

a[m·s$^{-II}$]

x

The difference between the minimum and maximum of the accelerometer signal amplitudes processed with a low pass with a limit frequency of 100 Hz between the forming times 7 - 43

$g_{203}(x)$

a[m·s$^{-II}$]

x

Effective value of an accelerometer signal processed with a high pass with a limit frequency of 20 kHz between the forming times of 7 - 43

$g_{204}(x)$

a[m·s$^{-II}$]

x

The difference between the minimum and maximum of the accelerometer signal amplitudes processed with a low pass with a limit frequency of 100 Hz between the forming times 1 - 7

$g_{205}(x)$

a[m·s$^{-II}$]

x

Effective value of an accelerometer signal processed with a high pass with a limit frequency of 20 kHz between the forming times of 1 – 7

$g_{206}(x)$

a[m·s$^{-II}$]

x

Fig. 62

The difference between the minimum and maximum of the accelerometer signal amplitudes processed with a low pass with a limit frequency of 100 Hz between the forming times 10 - 35

$f_{201}(x)$  $g_{201}(x)$

$a[m\cdot s^{-ll}]$

Effective value of an accelerometer signal processed with a high pass with a limit frequency of 20 kHz between the forming times of 10 – 35

$f_{202}(x)$  $g_{202}(x)$

$a[m\cdot s^{-ll}]$

The difference between the minimum and maximum of the accelerometer signal amplitudes processed with a low pass with a limit frequency of 100 Hz between the forming times 7 - 43

$f_{203}(x)$  $g_{203}(x)$

$a[m\cdot s^{-ll}]$

x

Effective value of an accelerometer signal processed with a high pass with a limit frequency of 20 kHz between the forming times of 7 - 43

$f_{204}(x)$  $g_{204}(x)$

$a[m\cdot s^{-ll}]$

x

The difference between the minimum and maximum of the accelerometer signal amplitudes processed with a low pass with a limit frequency of 100 Hz between the forming times 1 – 7

$f_{205}(x)$  $g_{205}(x)$

$a[m\cdot s^{-ll}]$

x

Effective value of an accelerometer signal processed with a high pass with a limit frequency of 20 kHz between the forming times of 1 – 7

$f_{206}(x)$  $g_{206}(x)$

$a[m\cdot s^{-ll}]$

x

Fig. 63

Fig. 64

Fig. 65

Fig. 66

18
21
20
24
16
47
22
19
23

Fig. 67

21

16 17

49

48
23

Fig. 68

[ ]       f_{333}(x)

[ ]       f_{334}(x)

x

x

Fig. 69

[ ]    f_{335}(x)

$\varphi$ [rad]    f_{336}(x)

x

x

Fig. 70

[ ]      f_{331}(x)

[ ]  f_{332}(x)

x

x

Fig. 71

[ ]   f_{337}(x)

$\varphi$ [rad]      f_{338}(x)

x

x

Fig. 72

Fig. 73

Fig. 74

Fig. 75

Fig. 76

Fig. 77

Fig. 78

Fig. 79

Fig. 80

Fig. 81

Fig. 82

Fig. 83

Fig. 84

Fig. 85

g₃₃₇(x)  f₃₃₇(x)

g₃₃₈(x)  f₃₃₈(x)

Fig. 86

g₃₃₉(x)

g₃₄₀(x)

Fig. 87

g₃₄₁(x)

g₃₄₂(x)

Fig. 88

g₃₃₉(x)  f₃₃₃(x)

g₃₄₀(x)  f₃₃₄(x)

Fig. 89

Fig. 90

Fig. 91

Fig. 92

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1177889 A2